(19) Europäisches Patentamt
European Patent Office
Office européen des brevets

(11) Publication number: **0 348 512 A1**

(12) # EUROPEAN PATENT APPLICATION

published in accordance with Art. 158(3) EPC

(21) Application number: **88909611.1**

(51) Int. Cl.4: **G 03 D 3/06**, G 03 C 5/26

(22) Date of filing: **02.11.88**

Data of the international application taken as a basis:

(86) International application number: **PCT/JP 88/01118**

(87) International publication number: **WO 89/04508 (18.05.89 89/11)**

(30) Priority: **04.11.87 JP 278871/87**
**07.06.88 JP 138483/88**
**10.08.88 JP 197883/88**
**19.09.88 JP 232593/88**

(43) Date of publication of application: **03.01.90**
**Bulletin 90/1**

(84) Designated Contracting States: **DE FR GB NL**

(71) Applicant: **FUJI PHOTO FILM CO., LTD., 210 Nakanuma Minami Ashigara-shi, Kanagawa 250-01 (JP)**

(72) Inventor: **HEKI, Tatsuo Fuji Photo Film Co., Ltd., 210, Nakanuma Minami-Ashigara-shi, Kanagawa 250-01 (JP)**
Inventor: **YOSHINO, Tatsuo Fuji Photo Film Co., Ltd., 798, Miyanodai Kaisei-cho Ashigarakami-gun, Kanagawa 258 (JP)**

(74) Representative: **Patentanwälte Grünecker, Kinkeldey, Stockmair & Partner, Maximilianstrasse 58, D-8000 München 22 (DE)**

(54) **METHOD AND APPARATUS FOR REPLENISHING PROCESSING FLUID.**

(57) This invention relates to a method and apparatus for replenishing a processing fluid for performing processing such as development, bleaching. fixing. etc.. of a photosensitive material which has been exposed to rays of light transmitting through an original document or original picture or by rays of light reflected by the original document or original picture. This invention relates to a method and apparatus for determining the replenishing quantity of a processing fluid and supplying it on the basis of at least one of the conditions including the image ratio and variable magnification when the photosensitive material is exposed. a mass processing condition which is set in accordance with the number of sheets of the photosensitive material to be processed, the shutdown time of the processing apparatus of the photosensitive material and the non-processing time of the apparatus for processing the photosensitive material during its operation. When the processing fluid is to be replenished, the replenishing quantity of this fluid is determined on the basis of the conditions described above that affect the replenishing quantity of the fluid. Accordingly, optimal processing conditions for the development, bleaching, fixing, etc., of a photosensitive material can be maintained and finish after processing can be made uniform. In this manner an excellent image can always be obtained.

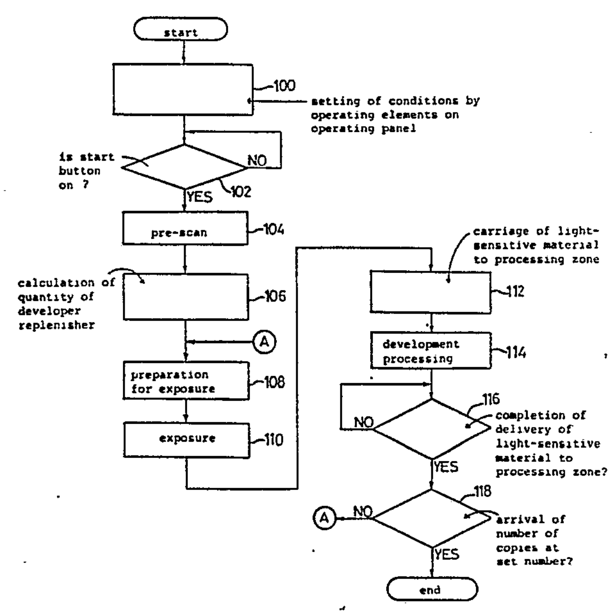


EP 0 348 512 A1

TITLE MODIFIED
see front page



SPECIFICATION

# METHOD OF SUPPLYING REPLENISHER FOR PROCESSING AND APPARATUS THEREFOR

## FIELD OF TECHNOLOGY

This invention relates to a method of supplying a replenisher for processing which comprises supplying a replenisher to a processing tank in proportion to the volume of processing of a photographic light-sensitive material having been exposed to light transmitted through an original or reflected on an original, such as development, bleach, fixation, and the like, and to an apparatus therefor.

## BACKGROUND OF TECHNOLOGY

In automatic developing apparatus of silver halide photographic materials, the amount of a replenisher for processing, e.g., development, to be supplied to a processing solution tank is generally calculated in proportion to the size of the photographic light-sensitive material to be exposed to light and the volume of the material to be processed.

That is, the replenisher is fed in proportion to the area of the photographic light-sensitive material to be processed so as to maintain prescribed processing conditions.

On exposure of the photographic light-sensitive material to light transmitted through or reflected on an original, since originals have widely varied densities, which are also subject to variation depending on exposure conditions, the exposure amount is non-uniform even with the size of the originals being equal. When photographic materials having been exposed with such non-uniform exposure amounts are development-processed, the rate of development of the light-sensitive materials also becomes non-uniform. The rate of development is one of the factors having great influences on the quantity of replenisher of a developer. That is, the higher the rate of development, the sooner is the development capability decreased, thus requiring a larger quantity of a replenisher of a developing solution. A specific example of such a case is processing of a large number of copies from an original having high density.

To the contrary, a small amount of a replenisher suffices for processing at a low rate of development. A specific example of such a case is processing of a large number of copies from an original having low density.

Therefore, if a processing replenisher is supplied in the quantity decided only by a factor of area as has conventionally been usual, over-replenishment or under-replenishment would result, failing to maintain constant processing conditions, which sometimes affects the finish of the photographic light-sensitive material. It has been thus necessary that an operator should monitor the finish of the photographic light-sensitive materials with his eyes at regular intervals and manually correct the quantity of a replenisher of a processing solution on the basis of his experience. Such manual correction of the quantity of replenisher involves complicated operations and is difficult to carry out particularly in silver salt photographic system color copying machines widely employed in offices, etc.

## DISCLOSURE OF THE INVENTION

An object of this invention is to provide a method of supplying a replenisher for processing and an apparatus therefor, by which optimum development conditions can always be maintained and workability can be improved.

The above object of this invention can be accomplished by a method of supplying a processing replenisher for processing photographic light-sensitive materials, which is characterized in that an image ratio at the time of exposing the photographic light-sensitive material is previously obtained on or before exposure,

and the quantity of a replenisher is decided on the basis of the image ratio determined.

The above object of this invention can also be accomplished by a method of supplying a processing replenisher for processing photographic light-sensitive materials, which is characterized in that the quantity of a replenisher is decided on the basis of a variable magnification on exposure of the photographic light-sensitive material to light.

The above object of this invention can further be accomplished by a method of supplying a processing replenisher for processing photographic light-sensitive materials, which is characterized in that the quantity of a replenisher is decided on the basis of a condition of large volume processing which is set in proportion to the volume of the photographic light-sensitive material processed.

The above object of this invention can furthermore be accomplished by a method of supplying a processing replenisher for processing photographic light-sensitive materials, which is characterized in that the quantity of a replenisher is decided on the basis of the non-operating time of a photographic light-sensitive material processing apparatus.

The above object of this invention can furthermost be accomplished by a method of supplying a processing replenisher for processing photographic light-sensitive materials, which is characterized in that the quantity of a replenisher is decided on the basis of a non-processing time of a photographic light-sensitive material processing apparatus during operation.

The above object of this invention can additionally be accomplished by an apparatus for supplying a processing replenisher for processing photographic light-sensitive materials which has a means for obtaining an image ratio of the photographic light-sensitive material to be exposed and a control means for determining the quantity of a replenisher on the basis of the image ratio.

In the present invention, the exposure amount applied to photographic light-sensitive materials has a very great influence on deterioration of a development replenisher. The exposure amount is therefore a factor determining the quantity of a replenisher. On the other hand, the optimum quantity of a replenisher would change with variations of any of the conditions relative to exposure amount given to the photographic light-sensitive material, such as an image ratio and a

variable magnification, a volume of the material processed, and the like.

Therefore, optimum conditions for processing of photographic light-sensitive materials, such as development, bleach, and fixation, can be maintained so as to assure uniformity of the finish after processing by determining the quantity of a replenisher on the basis of at least one of factors having influences on the quantity of processing replenisher, i.e., an image ratio in the photographic light-sensitive material, a variable magnification on exposure, a condition of large volume processing, a non-operating time of a photographic light-sensitive material processing apparatus, and a non-processing time during operation of the photographic light-sensitive material processing apparatus.

In deciding the quantity of a replenisher, it is more effective to combine the above-described conditions with conditions of the type and size of the photographic light-sensitive material.

The processing solution for processing the photographic light-sensitive materials as referred to herein may be any of processing solutions in which the light-sensitive material is dipped for processing, including a color developer, a black-and-white (B/W)

developer, a bleaching solution, a blix solution, fixer, and a stabilizer.

The present invention is hereinafter described in greater detail.

1) In a system in which a given amount of a replenisher is supplied, in cases where a large number of copies are made from an original having a high image ratio, a bromide ion concentration in a developer increases and a concentration of a developing agent decreases as the volume increases.

To the contrary, in cases where a large number of copies are made from an original having a low image ratio, the bromide ion concentration in the developer decreases, while the concentration of the developing agent increases, thus causing fog on the white background.

Therefore, it is necessary to determine the quantity of a replenisher on the basis of the image ratio when the photographic light-sensitive material is exposed to light and to prepare an apparatus for such determination.

2) In using a photographic light-sensitive material in roll form, recording is conducted taking the width of the roll as either a shorter side or a longer side. However, in cases of reduction recording, the width of

the photographic light-sensitive material is not always consistent with the reduced length of the shorter or longer side of an original, and the reduced image is recorded within a prescribed area of the photographic material, leaving a margin outside the reduced image.

When the aforesaid photographic light-sensitive material is used for reduction recording, since the margin outside the reduced image is not exposed to light, it is developed to form a black color in the case of direct positive light-sensitive materials or remains white in the case of negative light-sensitive materials.

When enlargement recording is effected, the enlarged image of the original sometimes exceeds the framework of the photographic light-sensitive material. When the area of the enlarged image exceeding the framework contains a large black image ratio, a developer is not consumed so much and a small quantity of a replenisher suffices for the development.

In the above-described reduction or enlargement recording, replenishment of a developer simply based on the image area or image ratio sometimes proves improper.

Accordingly, replenishment based on the variable magnification of the original is necessary.

3) A developer contains a preservative for preventing deterioration with time, and the preservative is

decided so that the performance of the developer may be maintained constant when the frequency of processing is normal. However, if processing is performed in a large quantity in a short time while replenishing the developer in proportion to the processing, the preservative is also supplied together with the developer despite that the developer is not substantially deteriorated, thereby accumulating in the tank solution. Therefore, it is necessary to reduce the quantity of the replenisher in such cases.

4) If an automatic developing machine, after turning on electric power source, is not used for processing for a long time, the water content in the developer is heated and evaporated to concentrate the developing agent, preservative, and the like, resulting in an increase of the bromide ion concentration in the developer.

Therefore, it is necessary to reduce the bromide ion concentration of the developer from which water has been evaporated.

5) If an automatic developing machine is not used for processing for a long time with the power being off, the concentration of the preservative decreases due to oxidation of the developer and the like. Therefore, when an automatic developing machine is not operated for

a long period of time, it is necessary to replenish the developer so as to increase the preservative concentration.

While each of the modes of replenishment as described in 1) to 5) above is effective when adopted alone, it goes without saying that an appropriate combination of these replenishment modes is preferred.

Color developers to be used for development processing of light-sensitive materials according to the present invention preferably include alkaline aqueous solutions containing, as a main component, an aromatic primary amine developing agent. Usable color developing agents include aminophenol compounds, and preferably p-phenylenediamine compounds. Typical examples of the latter are 3-methyl-4-amino-N,N-diethylaniline, 3-methyl-4-amino-N-ethyl-N-β-hydroxyethylaniline, 3-methyl-4-amino-N-ethyl-N-β-methanesulfonamidoethylaniline, 3-methyl-4-amino-N-ethyl-N-β-methoxyethylaniline, and sulfates, hydrochlorides or p-toluenesulfonates thereof. These compounds may be used in combination of two or more thereof according to the purpose.

The color developer generally contains pH buffers, such as carbonates, borates or phosphates of alkali metals, and developing inhibitors or antifoggants, such as bromides, iodides, benzimidazoles, benzothiazoles, and mercapto compounds. If desired, the color developer may further contain various preservatives, e.g., hydroxylamine, diethylhydroxylamine, hydrazine sulfites, phenylsemicarbazides, triethanolamine, catecholsulfonic acids, and triethylenediamine (1,4-diazabicyclo[2,2,2]octane); organic solvents, e.g., ethylene glycol and diethylene glycol; development accelerators, e.g., benzyl alcohol, polyethylene glycol, quaternary ammonium salts, and amines; color-forming couplers; competing couplers; fogging agents, e.g., sodium boron hydride; auxiliary developing agents, e.g., 1-phenyl-3-pyrazolidone; viscosity-imparting agents; various chelating agents exemplified by aminopolycarboxylic acids, aminopolyphosphonic acids, alkylphosphonic acids, and phosphonocarboxylic acids, e.g., ethylenediaminetetraacetic acid, nitroilotriacetic acid, diethylenetriaminepentaacetic acid, cyclohexanediaminetetraacetic acid, hydroxyethyliminodiacetic acid, 1-hydroxyethylidene-1,1-diphosphonic acid, nitrilo-N,N,N-trimethylenephosphonic acid, ethylenediamine-N,N,N',N'-tetramethylenephosphonic acid, and ethylenediamine-di(o-hydroxyphenylacetic acid), and salts thereof.

Reversal processing is usually carried out by black-and-white development followed by color development. Black-and-white developers to be used can contain one or more of known black-and-white developing agents, such as dihydroxybenzenes, e.g., hydroquinone, 3-pyrazolidones, e.g., 1-phenyl-3-pyrazolidone, and aminophenols, e.g., N-methyl-p-aminophenol.

The color developer or black-and-white developer usually has a pH of from 9 to 12. The quantity of a replenisher of the developer is usually 3 ℓ or less per $m^2$ of the light-sensitive material, though depending on the type of the color photographic light-sensitive material to be processed. The quantity of a replenisher may be reduced to 500 $ml/m^2$ or less by decreasing the bromide ion concentration in the replenisher. When the quantity of a replenisher is reduced, it is preferable to reduce the area of the liquid surface in contact with air in the processing tank to thereby prevent evaporation and air-oxidation of the liquid. The quantity of a replenisher can also be reduced by a means for suppressing accumulation of the bromide ion in the developer.

The photographic emulsion layer after color development is usually subjected to bleach. Bleach may be effected simultaneously with fixation (i.e., blix), or these two steps may be carried out separately. For speeding up of processing, bleach may be followed by

blix. Further, any of an embodiment wherein two blix baths connected in series are used, an embodiment wherein blix is preceded by fixation and an embodiment wherein blix is followed by bleach may be selected arbitrarily according to the purpose. Bleaching agents to be used include compounds of polyvalent metals, e.g., iron(III), cobalt(III), chromium(VI), and copper(II), peracids, quinones, nitroso compounds, and the like. Typical examples of these bleaching agents are ferricyanides; bichromates; organic complex salts of iron(III) or cobalt(III), such as complex salts with aminopolycarboxylic acids, e.g., ethylenediaminetetra-acetic acid, diethylenetriaminepentaacetic acid, cyclo-hexanediaminetetraacetic acid, methyliminodiacetic acid, 1,3-diaminopropanetetraacetic acid, and glycol ether diaminetetraacetic acid, or citric acid, tartaric acid, malic acid, etc.; persulfates; hydrobromic acid salts; permanganates; nitrobenzenes; and so on. Of these, aminopolycarboxylic acid iron(III) complex salts such as ethylenediaminetetraacetato iron(III) complex salts and persulfates are preferred in view of speeding up of processing and conservation of the environment. In particular, ethylenediaminetetraacetato iron(III) complex salts are useful in both of a bleaching solution and a blix solution. The bleaching or blix solution

usually has a pH of from 5.5 to 8. For speeding up of processing, it is possible to adopt a lower pH value.

The bleaching bath, blix bath or a prebath thereof can contain, if desired, a bleaching accelerator. Examples of useful bleaching accelerators are compounds having a mercapto group or a disulfide group as described in U.S. Patent 3,893,858, West German Patents 1,290,812, and 2,059,988, JP-A-53-32736, JP-A-53-57831, JP-A-53-37418, JP-A-53-72623, JP-A-53-95630, JP-A-53-95631, JP-A-53-104232, JP-A-53-124424, JP-A-53-141623 and JP-A-53-28426, Research Disclosure, No. 17129 (Jul., 1978); thiazolidine derivatives as described in JP-A-50-140129; thiourea derivatives as described in JP-B-45-8506, JP-A-52-20832 and JP-A-53-32735, and U.S. Patent 3,706,561; iodides as described in West German Patent 1,127,715 and JP-A-58-16235; polyoxyethylene compounds as described in West German Patents 966,410 and 2,748,430; polyamine compounds as described in JP-B-45-8836; the compounds described in JP-A-49-42434, JP-A-49-59644, JP-A-53-94927, JP-A-54-35727, JP-A-55-26506, and JP-A-58-163940; and bromine ions. Preferred among them are compounds having a mercapto group or a disulfide group because of their great acceleratory effects. In particular, the compounds disclosed in U.S. Patent 3,893,858, West German Patent 1,290,812 and JP-A-53-95630 are preferred. The compounds disclosed in U.S. Patent 4,552,834 are also preferred. These bleaching accelerators may be incorporated into the light-sensitive materials. These bleaching accelerators are particularly effective for blix of color light-sensitive materials for photographing.

Fixing agents include thiosulfates, thiocyanates, thioethers, thioureas, and a large amount of iodides. The thiosulfates are usually employed, with ammonium thiosulfate being applicable most broadly. Sulfites, bisulfites or carbonyl bisulfite adducts are suitably used as preservatives of the blix bath.

It is usual that the thus desilvered silver halide color photographic light-sensitive materials of this invention are subjected to washing and/or stabilization. The quantity of water to be used in the washing can be selected from a broad range depending on the characteristics of the light-sensitive material (for example, the material to be used, such as couplers, etc.), the end use of the light-sensitive material, the temperature of washing water, the number of washing tanks (number of stages), the replenishment system (e.g., counter-current system or direct-current system), and other various factors. Of these factors, the relationship between the number of washing tanks and the

quantity of water in a multistage counter-current system can be obtained according to the method described in Journal of the Society of Motion Picture and Television Engineers, Vol. 64, pp. 248-253 (May, 1955).

According to the multi-stage counter-current system described in the above reference, although the requisite amount of water to be used in the washing can be greatly reduced, the problem that, for example, bacteria would grow due to an increase of the retention time of water in the tank, and floating masses to be formed stick to the light-sensitive material occurrs. In the present invention, in order to coped with this problem, the method of reducing calcium and magnesium ion concentrations described in Japanese Patent Application No. 61-131632 can be used very effectively. Further, it is also effective to use isothiazolone compounds or thiabenzazoles as described in JP-A-57-8542, chlorine type bactericides, e.g., chlorinated sodium isocyanurate, benzotriazole, and bactericides described in Hiroshi Horiguchi, Bokinbobaizai no Kagaku, Eisei Gijutsu Gakkai (ed.), Biseibutsu no Mekkin, Sakkin, Bobigijutsu, and Nippon Bokin Bobi Gakkai (ed.), Bokin Bobizai Jiten.

The washing water to be used in the processing of the light-sensitive material of the present invention

has a pH of from 4 to 9, preferably from 5 to 8. The temperature of the washing water and the washing time can be selected from broad ranges depending on the characteristics and end use of the light-sensitive material, but usually ranges from 15 to 45°C in temperature and from 20 seconds to 10 minutes in time, preferably from 25 to 40°C in temperature and from 30 seconds to 5 minutes in time. The light-sensitive material of this invention may be directly processed with a stabilizer in place of the washing step. For the stabilization, any of the known techniques as described in JP-A-57-8543, JP-A-58-14834, and JP-A-60-220345 can be used.

The aforesaid washing step may be followed by stabilization in some cases. For example, a stabilizing bath containing formalin and a surface active agent as is used as a final bath for color light-sensitive materials for photographing is the case. This stabilizing bath may also contain various chelating agents or bactericides.

The overflow accompanying replenishment of the washing bath and/or stabilizing bath can be reused in other steps such as desilvering.

On the other hand, for development of black-and-white light-sensitive materials, various known developing agents can be used, including polyhydroxybenzenes, e.g., hydroquinone, 2-chlorohydroquinone, 2-methylhydroquinone, catechol, and pyrogallol; aminophenols, e.g., p-aminophenol, N-methyl-p-aminophenol, and 2,4-diaminophenol; 3-pyrazolidones, e.g., 1-phenyl-3-pyrazolidones, 1-phenyl-4,4'-dimethyl-3-pyrazolidone, 1-phenyl-4-methyl-4-hydroxymethyl-3-pyrazolidone, and 5,5-dimethyl-1-phenyl-3-pyrazolidone; and ascorbic acids, either alone or in combinations thereof. In addition, the developers described in JP-A-58-55928 may also be employed.

Details of developing agents, preservatives, buffers and developing methods for black-and-white light-sensitive materials and usages thereof are described in Research Disclosure, No. 17643, Items XIX-XXI (Dec., 1978), etc.

Silver halide in the photographic emulsion layers of the photographic light-sensitive materials which can be used in this invention may be any of silver bromide, silver iodobromide, silver iodochlorobromide, silver chlorobromide, and silver chloride.

Silver halide grains in the photographic emulsions may be so-called regular grains having a regular crystal form, such as a cubic form, an octahedral form, and a tetradecahedral form, or those having

an irregular crystal form such as a spherical form, those having a crystal defect such as a twinning plane, or those having a combination of these crystal forms. Mixtures of grains having various crystal forms may also be used.

The silver halide grains may be either fine grains of about 0.1 μm or smaller in diameter or giant grains having a projected area diameter of up to about 10 μm, and the emulsion may be either a monodisperse emulsion having a narrow size distribution or a polydisperse emulsion having a broad size distribution.

The silver halide emulsions which can be used in the present invention can be prepared by known processes as disclosed, e.g., in Research Disclosure, Vol. 176, No. 17643, pp 22-23, "1. Emulsion Preparation and Types" Dec., 1978), ibid., Vol. 187, No. 18716, p 648 (Nov., 1979).

The photographic emulsion to be used in the present invention can be prepared according to the processes described in P. Glafkides, Chemie et Physique Photographique, Paul Montel, (1967), G.F. Duffin, Photographic Emulsion Chemistry, Focal Press, (1966), and V.L. Zelikman et al, Making and Coating Photographic Emulsion, Focal Press, (1964). In some detail, the emulsion can be prepared by any of the acid process, the

neutral process, the ammonia process, etc. The reaction between a soluble silver salt and a soluble halogen salt can be carried out by any of a single jet process, a double jet process, a combination thereof, and the like. A method in which grains are formed in the presence of excess silver ions (so-called reverse mixing method) may be used. Further, as a kind of the double jet process, a so-called controlled double jet process, in which a pAg value of a liquid phase in which silver halide grains are formed is maintained constant, may also be used. According to the controlled double jet process, a silver halide emulsion having a regular crystal form and an almost uniform grain size can be obtained.

The emulsion can be subjected to physical ripening in the presence of a known silver halide solvent (e.g., ammonia, potassium thiocyanate, and thioethers and thione compounds described in U.S. Patent 3,271,157 and JP-A-51-12360, JP-A-53-82408, JP-A-53-144319, JP-A-54-100717, and JP-A-54-155828). This technique also provides a silver halide emulsion having a regular crystal form and an almost uniform grain size distribution.

The silver halide emulsion comprising the above-described regular grains can be obtained by controlling pAg and pH values during grain formation. For details,

reference can be made to it, e.g., in Photographic Science and Engineering, Vol. 6, pp. 159-165 (1962), Journal of Photographic Science, Vol. 12, pp. 242-251 (1964), U.S. Patent 3,655,394, and British Patent 1,413,748.

The monodisperse emulsion which can be used in the present invention typically includes those comprising silver halide grains having a mean grain size of about 0.05 μm or greater, at least 95% by weight of which fall within a size range of the mean grain size ±40%, and particularly those comprising silver halide grains having a mean grain size of from 0.15 to 2 μm, at least 95% by weight or number of which fall within a size range of the mean grain size ±20%. Processes for preparing such emulsions are described in U.S. Patents 3,574,628 and 3,655,394, and British Patent 1,413,748. The monodisperse emulsions described in JP-A-48-8600, JP-A-51-39027, JP-A-51-83097, JP-A-53-137133, JP-A-54-48521, JP-A-54-99419, JP-A-58-37635, and JP-A-58-49938 can also be used to advantage.

Tabular grains having an aspect ratio of 5 or more can also be used in the present invention. The tabular grains can be prepared easily by the processes described in Gutoff, Photographic Science and Engineering, Vol. 14, pp248-257 (1970), U.S. Patents

4,434,226, 4,414,310, 4,433,048, and 4,439,520, and British Patent 2,112,157. Use of the tabular grains brings about improvements on covering power and efficiency of color sensitization by sensitizing dyes, as described in detail in U.S. Patent 4,434,226 above cited.

Grains having their crystal form controlled by use of a sensitizing dye or a certain kind of an additive during grain formation can also be used.

The individual silver halide crystals may have either a homogeneous structure or a heterogeneous structure composed of a core and an outer shell differing in halogen composition, or may have a layered structure. These emulsion grains are disclosed in British Patent 1,027,146 and U.S. Patents 3,505,068 and 4,444,877. Further, the grains may have joined thereto a silver halide having a different halogen composition or a compound other than silver halide, e.g., silver thiocyanate, lead oxide, etc. by epitaxial junction. These emulsion grains are disclosed in U.S. Patents 4,094,684, 4,142,900, and 4,459,353, British Patent 2,038,792, U.S. Patents 4,349,622, 4,395,478, 4,433,501, 4,463,087, 3,656,962, and 3,852,067, and JP-A-59-162540.

Additionally, grains having a so-called internal latent image type structure which are obtained by

forming sensitivity specks (e.g., $Ag_2S$, $Ag_n$, Au) on crystal surfaces by chemical sensitization followed by further allowing silver halide to grow therearound are also employable.

During silver halide grain formation or physical ripening, a cadmium salt, a zinc salt, a lead salt, a thallium salt, an iridium salt or a complex thereof, a rhodium salt or a complex thereof, or an iron salt or a complex thereof may be present in the system.

These various emulsions may be either of the surface latent image type in which a latent image is predominantly formed on the surface of grains or of the internal latent image type in which a latent image is predominantly formed in the inside of the grains.

Further, the emulsion may be a direct reversal emulsion. The direct reversal emulsion may be any of the solarization type, the internal latent image type, the light fog type, and the type of using a nucleating agent, and a combination thereof.

Among them, it is preferable to use the internal latent image type emulsion which has not been fogged in advance and to fog it by light before or during processing or by use of a nucleating agent to thereby obtain a direct positive image.

The internal latent image type silver halide emulsion not having been previously fogged to be used in this invention is an emulsion containing silver halide grains whose surface is not previously fogged and which form a latent image mainly in the inside thereof. More specifically, a silver halide emulsion is coated on a transparent support to a given coverage and exposed to light for a fixed time of from 0.01 to 10 seconds. The exposed sample is developed in Developer A having the following formulation (internal developer) at 20°C for 6 minutes, and the maximum density is measured by a usual measurement method. A similarly exposed sample is developed in Developer B having the following formulation (surface developer) at 18°C for 5 minutes, and the maximum density is measured. Preferred internal latent image type silver halide emulsion are those having the former maximum density at least 5, more preferably at least 10, times the latter maximum density.

Internal Developer A:

| | |
|---|---|
| Metol | 2 g |
| Sodium sulfite (anhydrous) | 90 g |
| Hydroquinone | 8 g |
| Sodium carbonate (monohydrate) | 52.5 g |
| KBr | 5 g |
| KI | 0.5 g |

| | |
|---|---|
| Water to make | 1 ℓ |

Surface Developer B:

| | |
|---|---|
| Metol | 2.5 g |
| ℓ-Ascorbic acid | 10 g |
| $NaBO_2 \cdot 4H_2O$ | 35 g |
| KBr | 1 g |
| Water to make | 1 ℓ |

Specific examples of the above stated internal latent image type emulsion include conversion type silver halide emulsions as described in British Patent 1,011,062 and U.S. Patents 2,592,250 and 2,456,943 and core/shell type silver halide emulsions. The core/shell type silver halide emulsions include those described in JP-A-47-32813, JP-A-47-32814, JP-A-52-134721, JP-A-52-156614, JP-A-53-60222, JP-A-53-66218, JP-A-53-66727, JP-A-55-127549, JP-A-57-136641, JP-A-58-70221, JP-A-59-208540, JP-A-59-216136, JP-A-60-107641, JP-A-60-247237, JP-A-61-2148, and JP-A-61-3137, JP-B-56-18939, JP-B-58-1412, JP-B-58-1415, JP-B-58-6935, and JP-B-58-108528, U.S. Patents 3,206,313, 3,317,322, 3,761,266, 3,761,276, 3,850,637, 3,923,513, 4,035,185, 4,395,478, and 4,504,570, European Patent 0,017,148, and Research Disclosure, No. 16345 (Nov., 1977).

Removal of soluble silver salts from an emulsion before or after physical ripening can be achieved by a noodle washing method, a flocculation sedimentation method, and a ultrafiltration method, and the like.

The emulsion to be used in the present invention is usually subjected to physical ripening, chemical ripening, and spectral sensitization. Additives to be used in these steps are described in Research Disclosure, No. 17643 (Dec., 1978) and ibid., No. 18716 (Nov., 1979) as tabulated below.

The known photographic additives which can be used in the present invention are also described in the above cited two Research Disclosures as shown in the table.

| | | RD 17643 | RD 18716 |
|---|---|---|---|
| 1. | Chemical Sensitizer | Page 23 | Page 648, right column |
| 2. | Sensitivity Increasing Agent | | - ditto - |
| 3. | Spectral Sensitizer and Supersensitizer | Pages 23 to 24 | Page 648, right column to page 649, right column |
| 4. | Whitening Agent | Page 24 | |
| 5. | Antifoggant and Stabilizer | Pages 24 to 25 | Page 649, right column |
| 6. | Light-Absorbent, Filter Dye, and Ultraviolet Absorbent | Pages 25 to 26 | Page 649, right column to page 650, left column |

| | | | |
|---|---|---|---|
| 7. | Stain Inhibitor | Page 25, right column | Page 650, left column to right column |
| 8. | Dye Image Stabilizer | Page 25 | |
| 9. | Hardening Agent | Page 26 | Page 651, left column |
| 10. | Binder | Page 26 | - ditto - |
| 11. | Plasticizer and Lubricant | Page 27 | Page 650, right column |
| 12. | Coating Aid and Surface Active Agent | Pages 26 to 27 | - ditto - |
| 13. | Antistatic Agent | Page 27 | - ditto - |

Various color couplers can be used in this invention. Specific examples of the color couplers are described in the patents described in the above cited Research Disclosure (RD), No. 17643, VII-C to G.

Preferred yellow couplers include those described in U.S. Patents 3,933,501, 4,022,620, 4,326,024, and 4,401,752, JP-B-58-10739, and British Patents 1,425,020 and 1,476,760.

Preferred magenta couplers include 5-pyrazolone compounds and pyrazoloazole compounds. Particularly preferred are those described in U.S. Patents 4,310,619 and 4,351,897, European Patent 73,636, U.S. Patents 3,061,432 and 3,725,067, Research Disclosure, No.24220 (Jun., 1984), JP-A-60-33552, Research Disclosure, No.

24230 (Jun., 1984), JP-A-60-43659, and U.S. Patents 4,500,630 and 4,540,654.

Cyan couplers include naphthol and phenol couplers. Preferred of them are those described in U.S. Patents 4,052,212, 4,146,396, 4,228,233, 4,296,200, 2,369,929, 2,801,171, 2,772,162, 2,895,826, 3,772,002, 3,758,308, 4,334,001, and 4,327,173, West German Patent Publication No. 3,329,729, European Patent 121,365A, U.S. Patents 3,446,622, 4,333,999, 4,451,559, and 4,427,767, and European Patent 161,626A.

Colored couplers for correction of unnecessary absorptions of the developed color preferably include those described in Research Disclosure, No. 17643, VII-G, U.S. Patent 4,163,670, JP-B-57-39413, U.S. Patents 4,004,929 and 4,138,258, and British Patent 1,146,368.

Couplers which form a dye having moderate diffusibility preferably include those described in U.S. Patent 4,366,237, British Patent 2,125,570, European Patent 96,570, and West German Patent Application (OLS) No. 3,234,533.

Typical examples of polymerized dye forming couplers are described in U.S. Patents 3,451,820, 4,080,211, and 4,367,282, and British Patent 2,102,173.

Couplers capable of releasing a photographically useful residue upon coupling can also be used in this

invention with advantage. Preferred examples of DIR couplers which release a developing inhibitor are described in the patents cited in RD 17643, VII-F, JP-A-57-151944, JP-A-57-154234, and JP-A-60-184248, and U.S. Patent 4,248,962. Couplers capable of imagewise releasing a nucleating agent or a development accelerator at the time of development preferably include those described in British Patents 2,097,140 and 2,131,188, and JP-A-59-157638 and JP-A-59-170840.

In addition to the foregoing couplers, the light-sensitive material according to the present invention may further use competing couplers as described in U.S. Patent 4,130,427, poly-equivalent couplers as described in U.S. Patents 4,283,472, 4,338,393, and 4,310,618, DIR redox compounds or DIR couplers or DIR coupler-releasing couplers or redox as described in JP-A-60-185950 and JP-A-62-24252, couplers capable of releasing a dye which returns to its original color after release as described in European Patent 173,302A, couplers capable of releasing a bleach accelerator as described in JP-A-61-201247, and couplers capable of releasing a ligand as described in U.S. Patent 4,553,477.

The light-sensitive materials to be used in the present invention can contain a color fog inhibitor or a color mixing inhibitor.

Typical examples of these additives are described in JP-A-62-215272, pp 85-193.

For the purpose of improving color developability of couplers, a color formation enhancing agent can be used. Typical examples of the agent are described in JP-A-62-215272, pp 121-125.

The light-sensitive materials of this invention can further contain dyes for preventing irradiation or halation, ultraviolet absorbents, plasticizers, brightening agents, matting agents, air fog inhibitors, coating aids, hardening agents, antistatic agents, slip agents, and so on. Typical examples of these additives are described in Research Disclosure, No. 17643, pp 25-27, VIII to XIII (Dec., 1978) and ibid., No. 18716, pp 647-651 (Nov., 1979).

The present invention is also applicable to multi-layer multicolor photographic materials having at least two layers differing in spectral sensitivity on a support. The multi-layer natural color photographic materials usually comprises a support having provided thereon at least one red-sensitive emulsion layer, at least one green-sensitive emulsion layer, and at least

one blue-sensitive emulsion layer. The order of these layers is arbitrarily selected according to necessity. A preferred order of the layers is red-sensitive to green-sensitive to blue-sensitive layers from the support side or green-sensitive to red-sensitive to blue-sensitive layers from the support side. Each of the aforesaid emulsion layers may be composed of two or more emulsion layers differing in sensitivity. A light-insensitive layer may be present among two or more emulsion layers having the same color sensitivity. It is usual that a red-, green- or blue-sensitive emulsion layer is combined with a cyan-, magenta- or yellow-forming coupler, respectively. Other combinations may also be used in some cases.

In addition to the silver halide emulsion layers, the light-sensitive materials of this invention preferably contain auxiliary layers, such as a protective layer, an intermediate layer, a filter layer, an antihalation layer, a backing layer, a white reflective layer, and the like.

The photographic emulsion layers and other layers in the photographic light-sensitive materials of this invention are coated on a support, such as the supports described in Research Disclosure, No. 17643, p 28, VVII (Dec., 1978), European Patent 0,102,253, and

JP-A-61-97655. The method of coating described in Research Disclosure, No. 17643, pp 28-29, XV can be made use of.

The present invention is applicable to various types of color light-sensitive materials, such as color print films, color reversal films for slides or televisions, and color reversal papers. The present invention is also applicable to white-and-black light-sensitive materials utilizing three color mixing as described in Research Disclosure, No. 17123 (Jul., 1978).

The present invention is further applicable to black-and-white photographic light-sensitive materials.

In using direct positive light-sensitive materials in the present invention, fogging is effected by "light fog method" and/or "chemical fog method" as hereinafter described. Exposure of the entire surface in the light fog method, i.e., fog exposure, in the present invention is conducted before development processing and/or during development processing after imagewise exposure. Namely, an imagewise exposed light-sensitive material is exposed to light while it is dipped in a developer or a prebath of a developer, or after taken out from the developer or the prebath but

before it is dried, most preferably while it is in the developer.

A light source having a wavelength within the sensitive wavelengths of the light-sensitive material can be used for fog exposure. In general, any of a fluorescent lamp, a tungsten lamp, a xenon lamp, and sunlight is employable. Specific methods for fog exposure are described, e.g., in British Patent 1,151,363, JP-B-45-12710, JP-B-45-12709, and JP-B-58-6936, and JP-A-48-9727, JP-A-56-137350, JP-A-57-129438, JP-A-58-62652, JP-A-58-60739, JP-A-59-70223 (corresponding to U.S. Patent 4,440,851), and JP-A-58-120248 (corresponding to European Patent 89101A2). In the case of light-sensitive materials having light sensitivity in the whole wavelength region, for example, color light-sensitive materials, a light source having high color rendition properties (as close to white color as possible) as described in JP-A-56-137350 and JP-A-58-70223 is suitable. The intensity of illumination suitably ranges from 0.01 to 2000 lux, preferably from 0.05 to 30 lux, more preferably from 0.05 to 5 lux. It is desirable to use a lower intensity of illumination as the sensitivity of the emulsions used in the light-sensitive material is increased. The intensity of illumination can be controlled by varying the luminous

intensity of the light source, reducing light by means of various filters, or varying the distance between the light-sensitive material and the light source or the angle between the light-sensitive material and the light source. Further, the intensity of illumination of fogging light can be increased from low to high either continuously or stepwise.

It is recommended that the light-sensitive material is irradiated with light after it is dipped in a developer or a prebath thereof and the liquid sufficiently penetrates into the emulsion layers. The time from the penetration of the liquid to light fog exposure is generally in the range of from 2 seconds to 2 minutes, preferably from 5 seconds to 1 minute, more preferably from 10 to 30 seconds.

The exposure time for fogging usually ranges from 0.01 second to 2 minutes, preferably from 0.1 second to 1 minute, more preferably from 1 to 40 seconds.

A nucleating agent to be used in the so-called "chemical fog method" in the present invention can be incorporated into the light-sensitive material or a processing solution for the light-sensitive material, and preferably into the light-sensitive material.

The "nucleating agent" as referred to herein means a substance acting during surface development processing of an internal latent image type silver halide emulsion not having been previously fogged to form a direct positive image. In the present invention, fogging using the nucleating agent is particularly preferred.

In cases where the nucleating agent is incorporated into the light-sensitive material, it is preferably added into the internal latent image type silver halide emulsion layer. It may also be added to other layers, for example, an intermediate layer, a subbing layer, and a backing layer, as long as the nucleating agent added is diffused during coating or processing to be adsorbed onto silver halide grains.

In cases where the nucleating agent is added to a processing solution, it may be added to a developer or a prebath of a lower pH value as described in JP-A-58-178350.

Two or more kinds of nucleating agents may be used in combination.

The nucleating agent which can preferably be used in the present invention includes compounds represented by formulae (N-I) and (N-II):

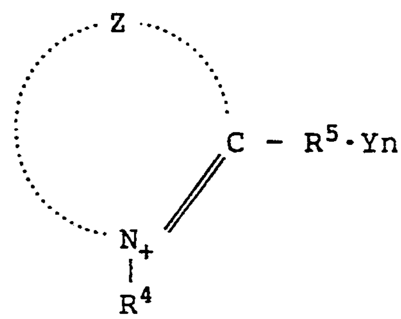

(N-I)

wherein Z, which may have a substituent, represents a non-metallic atomic group necessary to form a 5- or 6-membered heterocyclic ring; $R^4$ represents an aliphatic group; $R^5$ represents a hydrogen atom, an aliphatic group or an aromatic group; $R^4$ or $R^5$ may have a substituent; $R^5$ may be connected to the heterocyclic ring formed by Z to form a ring; provided that at least one of $R^4$, $R^5$, and Z contains an alkynyl group, an acyl group, a hydrazine group, or a hydrazone group, or $R^4$ and $R^5$ form a 6-membered ring to form a dihydropyridinium skeleton; at least on of $R^4$, $R^5$, and substituents of Z may contain a group accelerating adsorption onto silver halide; Y represents a counter ion for a charge balance; and n represents 0 or 1.

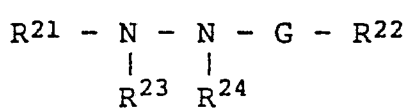

(N-II)

wherein $R^{21}$ represents an aliphatic group, an aromatic group, or a heterocyclic group; $R^{22}$ represents a hydrogen atom, an alkyl group, an aralkyl group, an aryl group, an alkoxy group, an aryloxy groups, or an amino group; G represents a carbonyl group, a sulfonyl group, a sulfoxy group, a phosphoryl group, or an iminomethylene group

```
     /
(HN=C  );
     \
```

$R^{23}$ and $R^{24}$ both represent a hydrogen atom, or one of which represents a hydrogen atom, with the other representing one of an alkylsulfonyl group, an arylsulfonyl group, and an acyl group; provided that G, $R^{22}$, $R^{24}$, and the hydrazine nitrogen may form a hydrazone structure

```
  \    /
(  N-N=C  );
  /    \
```

any of the above-described groups, if possible, may have a substituent.

Specific examples of the compounds represented by formulae (N-I) and (N-II) are described in JP-A-63-106656.

In order to further accelerate the activity of the aforesaid nucleating agent, the following nucleation accelerator can be used in this invention.

The nucleation accelerator to be added includes tetraazaindenes, triazaindenes and pentaazaindenes each of which has at least one mercapto group which may be substituted with an alkali metal atom or an ammonium group and the compounds described in JP-A-63-106656.

## BRIEF DESCRIPTION OF THE DRAWINGS

Figure 1 is a vertical cross section showing a silver salt system color copying machine to which the present invention is applied.

Figure 2 is a schematic block diagram of a processing zone.

Figure 3 is a block diagram of a control device.

Figure 4 is a plane view showing a scanning area of a color original.

Figure 5 is a table of an average density of an original vs. a corresponding image ratio of the original.

Figure 6 is a graph of an average logarithm of a photometric value E vs. a corresponding factor F of a development rate of a light-sensitive material.

Figure 7 is a table of an average logarithm of a photometric value E vs. a corresponding factor F of a development rate of a light-sensitive material.

Figures 8 and 11 each illustrates a flow chart showing a routine of replenishment.

Figures 9 and 10 each illustrates a flow chart showing the processing flow of a silver salt system color copying machine applied to the examples of this invention.

Figure 12 is a flow chart showing a routine of roller cleaning.

Figure 13 is a view of a fog exposure apparatus installed in an automatic developing machine.

PREFERRED EMBODIMENT OF THE INVENTION

Embodiments of the present invention are illustrated below by referring to the accompanying drawings.

Figure 1 is a schematic block diagram of a silver salt photographic system color copying machine for carrying out the method of this invention.

Apparatus body 10 contains paper feeding zone 12 on the right-hand side, drying zone 18 on the left-hand side, and exposure zone 14 and processing zone 16 in the upper part. In the silver salt photographic system color copying machine are fitted a pair of magazines 20 and 22 on the upper and lower sides, in each of which light-sensitive material 24 or 26 is loaded in the form of a roll and taken out from the end into the paper feeding zone 12. For instance, 24 is a light-sensitive material suitable for copying color photograph originals, and 26 is a light-sensitive material suitable for copying color print originals.

The light-sensitive material 24 or 26 taken out of the magazine 20 or 22 is passsed through the paper

feeding zone 12, forwarded to exposure window 28 where it is exposed to the image of color original 32 placed on transparent original mount 30 at the top of the exposure zone 14. The color original 32 is held down in intimate contact with the original mount 30 by original hold-down lid 34 and irradiated with light from light source 38 in light source unit 36. On opening of shutter 44, the light-sensitive material 24 (or 26) in front of the exposure winder 28 is exposed to the image of the color original 32 reflected on a plurality of mirror 40 through optical means 42.

In the middle of the passage of traveling light-sensitive material 24 or 26 (below the exposure winder 28 in Fugure 1) is provided change-over guide 50 which functions to change the direction of the light-sensitive material 24 or 26 traveling downward so as to guide it to the processing zone 16 when necessary. With the shutter 44 closed, the light reflected on a standard white board and the image of the original is reflected on the shutter 44 and photometrically measured with plural (6 in the instant embodiment) photosensor 43. Exposure controlling date can be decided through control device 45 based on a reflected density D'n (see equation shown below) obtained from the thus measured white level value and image photometric value (pre-scan).

$$D'n = \log(\text{white level value}/\text{image photometric value}) \quad ...(1)$$

The photosensors used in this embodiment comprise two for each of red light (R), green light (G), and blue light (B). An average of the photometric values is taken as reflected density D'n, setting the maximum of the photometric density value at 2.0. The sensitivity peak wavelength of each photosensor 43 is as shown in Table below (Table 1).

Table 1

| Sensor | Sensitivity Peak Wavelength |
|---|---|
| R1 | 630 nm |
| R2 | 680 nm |
| G1 | 540 nm |
| G2 | 570 nm |
| B1 | 450 nm |
| B2 | 400 nm |

The photometric means 45 has a function for concentratively controlling the individual functions of the apparatus as a whole combined with a function for obtaining information about density for deciding a quantity of a development replenisher, one of the means for accomplishing the object of the present invention.

The processing zone 16 comprises development tank 46, blix tank 47, and washing tanks 48 and 49 connected in series. The light-sensitive material 24 (or 26) is subjected to development, bleach, fixation, and washing with the respective processing solution charged in each of these tanks and then forwarded to the drying zone 18. Below the development tank 46, blix tank 47 and washing tanks 48 and 49, replenishment tanks 60, 62, 64, and 166 are provided, respectively, so that a replenisher may be supplied to the respective tank according to necessity.

The light-sensitive material 24 (or 26) is dried in the drying zone 18 and forwarded onto tray 54.

Figure 2 is a schematic block diagram of the processing zone 16.

The processing zone 16 comprises development tank 46 where the exposed light-sensitive material 24 or 26 is developed, blix tank 47 where the developed light-sensitive material 24 or 26 is subjected to bleach and

image fixation, and washing tanks 48 and 49 where the image-fixed light-sensitive material 24 or 26 is washed with water. Each of tanks 46, 47, 48, and 49 is equipped with shutter 200, 202, 204, and 206 so as to minimize the contact area between the liquid in the tank and environmental air. The processing zone 16 further includes tank 60 for replenishing the development tank 46 with a developer, tank 166 for replenishing the blix tank with a bleaching solution, tank 62 for replenishing the blix tank 47 with a fixer, and tank 64 for replenishing the washing tanks 48 and 49 with a washing solution (water), each of which is appropriately replenished with the respective solution. The solutions in the tanks 60, 62, 64, and 166 are supplied to the corresponding tanks 46, 47, 48, and 49 by means of pumps 171, 173, 175, and 177 connected to the respective replenishment tanks via filters 170, 172, 174, and 176 as shown by solid lines. Each of the tanks 60, 62, and 64 for replenishment of a developer, fixer, and water contains deformable bags 161, 163, and 165, respectively, made of, for example, vinyl plastics, which contains the respective replenisher. The overflow from the respective tank is recovered between the tank 60, 62, or 64 and the bag 161, 163, or 165, respectively, as shown by the dotted line.

The tank 64 containing water supplies water to the washing tanks 48 and 49 and, at the same time, supplies water to cleaning devices 190 to 198 for cleaning pairs of rollers shown by numericals 181, 182, 183, 184, 185, and 187 among the pairs of rollers 180 to 187 carrying the light-sensitive material 24 or 26 through the several tanks. The water supplied reaches the pairs of rollers 181, 182, 183, and 187 through the cleaning devices 190 to 198 to clean the surface of the rollers.

The controlling device 45 is described in detail by referring to Figure 3.

As shown in Figure 3, the plural photosensors 43 which receive light reflected on the shutter 44 (reflected light from the color original) are connected to multiplexer 70 via current-voltage transducer 66 and voltage amplifier 68. The output side of the multiplexer 70 is connected to the controlling device 45 via A/D converter 72.

The controlling device 45 is composed of CPU 74, RAM 76, ROM 78, input-output port 80, clocking IC (RTC) 77, and bus 82 for connecting these units, such as a data bus and a control bus. Among them, RAM 76 and RTC 77 are backed up by battery 79. The output signal line from the A/D converter 72 is connected to the input-output port 80. The input-output port 80 is connected to the multiplexer 70 to control change-over of the input and output signals of the photosensers 43 in the multiplexer 70.

Further, to the input-output port 80 are connected signal lines from various setting switches (not shown) on a operating panel 84, whereby various setting conditions, such as (1) setting of magnification, (2) setting of the number of copies, (3) setting of paper size, (4) selection of the light-sensitive material, (5) setting of density control, (6) setting of color control value, and (7) setting of start, are put in the port 80.

From the input-output port 80 are sent signals controlling movement of each part of the apparatus, such as (1) signals controlling the exposure zone (scan controlling signals, color density controlling signals), (2) signals controlling the paper feeding zone (signals controlling carriage of the light-sensitive material, signals controlling cutting of the light-sensitive material), and (3) signals controlling the processing zone (signals controlling supply of a replenisher, temperature controlling signals, signals controlling carriage of the light-sensitive material within the processing zone).

Thus, according to the setting conditions setted by the operating panel 84, the controlling device 45 concentratively controls scanning of the color original 32 and carriage and development processing of the light-sensitive material 24 or 26 to perform a series of action synchronously and thus the operation is performed with precision.

The controlling device 45 also controls the quantity of a replenisher and time of replenishment to the development tank 46. That is, the controlling device 45 controls normal replenishment which is conducted every time the light-sensitive material 24 or 26 is processed, evaporation replenishment for making up the evaporation loss of a developer at the time of controlling temperature of the developer, non-operation replenishment for making up the evaporation loss of a developer during non-operation of the color copying machine for a long time, and liquid level detection replenishment which is conducted when the liquid level of the development tank 46 is lower than a prescribed level at the time of turning on the power source or when the liquid level gets lower than the prescribed level during operation.

The normal replenishment is explained below. ROM 78 of the controlling device 45 has a memory of

equation (2) shown below, and the quantity of a replenisher is calculated based on this equation.

$$P = a \cdot S[1+\alpha \times \{\frac{[G \cdot C \cdot D \cdot A + (1-A)]}{x_0} -1\}]\beta \cdot \gamma \quad \ldots \quad (2)$$

wherein the variables and their ranges are as follows.

P: Calculated quantity of replenisher;

a: Standard quantity of replenisher (24.9 ml);

S: Paper size ($0.00 \leqq S \leqq 1.00$)

α: Control factor ($0.00 \leqq \alpha \leqq 1.00$)

G: Development rate of unexposed light-sensitive material ($0.00 \leqq G \leqq 1.00$)

D: Image ratio of original ($0.00 \leqq D \leqq 1.00$)

C: Density control factor ($0.00 \leqq C \leqq 2.55$)

A: Reduction ratio ($0.10 \leqq A \leqq 1.00$)

$x_0$: Standard development rate ($0.00 \leqq x_0 \leqq 1.00$)

β: Light-sensitive material factor ($0.00 \leqq \beta \leqq 2.55$)

γ: Large volume processing factor ($0.00 \leqq \gamma \leqq 1.00$)

Each of the above parameters is explained below in detail.

A: Standard Quantity of Replenisher

A quantity of a replenisher per A4-size in cases where a standard light-sensitive material is exposed at a standard rate of development. Previously put into the memory of ROM 78 as 24.9 ml in this embodiment.

S: Paper Size

An area ratio of paper used, a A4-sized paper being taken as 1.00. Set by pressing an operating button on the operating panel 84.

α: Control Factor

Slight-under-control is taken in the embodiment, and α is set at 0.50 (fixed) and put into the memory of ROM 78 in advance.

G: Development Rate of Unexposed Light-sensitive Material

Calculated from the rate of development at the time of exposing a black original. Set at 0.70 (fixed) and put into the memory of ROM 78 in advance.

D: Image Ratio of Original

Calculated by utilizing the data obtained by the above-described pre-scan. Since the photosensors 43 of the embodiment are composed of two each of red (R), green (G), and blue (B), an average of their photometric values is taken as a density value for the calculation of the image ratio of original. With the maximum

density value being set at 2.0 and the average of R, G, and B being taken as D', D' can then be calculated as follows.

As shown in Figure 4, when a color original is subjected to photometry, with its photometric area being divided into n sections, since there are six photosensors 43, the measured values are tabulated and put into the memory of RAM 76, where each one of the two values for each color (one each for R, G, and B) is chosen as shown in Table 2, and an average density each of R, G, and B, $D'_{(R,G,B)1}$, is calculated according to equations shown below.

Table 2

| Section | Photometric Density | | |
|---|---|---|---|
| 1 | $D'_{1R1}$ | $D'_{1G1}$ | $D'_{1B1}$ |
| 2 | $D'_{2R1}$ | $D'_{2G1}$ | $D'_{2B1}$ |
| 3 | $D'_{3R1}$ | $D'_{3G1}$ | $D'_{3B1}$ |
| ⋮ | | | |
| n | $D'_{nR1}$ | $D'_{nG1}$ | $D'_{nB1}$ |

$$D'_{R1} = \frac{1}{n}\sum_{n=1}^{n}(D'_{nR1}) \quad \ldots\ldots\ldots\ldots\ldots\ldots (3)$$

$$D'_{G1} = \frac{1}{n}\sum_{n=1}^{n}(D'_{nG1}) \quad \ldots\ldots\ldots\ldots\ldots\ldots (4)$$

$$D'_{B1} = \frac{1}{n}\sum_{n=1}^{n}(D'_{nB1}) \quad \ldots\ldots\ldots\ldots\ldots\ldots (5)$$

Accordingly, D' can be obtained from:

$$D' = 1/3(D'_{R1} + D'_{G1} + D'_{B1}) \quad ..... \quad (6)$$

A table is prepared from D' as shown in Figure 5, and the corresponding D is calculated. The maximum of D' is 2.00, and up to the maximum are made 8 steps for every 0.25.

In the table shown in Figure 5, the solid line shows a table for direct positive photographic light-sensitive materials hereinafter described, and the dotted line shows a table for negative color papers hereinafter described.

C: Density Control Factor

A factor calculated through exposure control algorism. The standard value is 1.0. This value can be set by the unit of 0.05 by means of a switch knob on the operating panel 84 and through automatic color density control algorism which is based on the original density information obtained by the above-described pre-scan (a part of the exposure control algorism).

A: Reduction Ratio

In the silver salt photographic system color copying machine applied to the embodiment, the outside area of the original mount 32 is also enters in the

actual angle of view. Since this area is optically refused, the corresponding area of the light-sensitive material 24 or 26 remains unexposed. Therefore, when reduction copy is selected by the operation elements on the operating panel, it is necessary to change the quantity of a replenisher in proportion to the reduction ratio, for example, by addition in the cases of direct positive photographic light-sensitive materials. The reduction ratio is hence subtracted from the standard value 1.0. A is equal to 1 in the case of enlargement copying or full-size copying.

$x_0$: Standard Development Rate

A rate of development when a standard original is exposed to light under standard exposure conditions. Set at 0.25 (fixed) and previously put into the memory of ROM 78.

β: Light-Sensitive Material Factor

Set according to the type of the light-sensitive material used, 24 or 26, and previously put into the memory of ROM 78 to be, for example, 1.0 in the case of a silver halide light-sensitive material having a white support or 1.50 in the case of a silver halide light-sensitive material having a transparent support for OHP (over-head projector). Automatically set by pressing the selection button on the operating panel 84.

γ: Large Volume Processing Factor

Set in proportion to the number of the sheets of the light-sensitive material 24 or 26 to be processed continuously, reaching its maximum 1 when C·D is 1 or more, and tabulated in 4 steps with a difference of the unit of 0.03 for every 25 sheets of from 0 up to 99 sheets. Namely, $\gamma=1.00$ when the number of the light-sensitive material 24 or 26 to be continuously processed is from 1 to 25; $\gamma=0.95$ when said number is from 26 to 50; $\gamma=0.92$ when said number is from 51 to 75; and $\gamma=0.89$ when said number is from 76 to 99.

The amount of the developer for effecting development processing varies depending on the density control factor C of the light-sensitive material 24 or 26 to be continuously processed and the image ratio D of an original, the same being applied to the quantity of a replenisher for the developer. Therefore, when a large volume of the light-sensitive material 24 or 26 is supposed to be continuously processed, the quantity of a replenisher should be calculated taking the number of the sheets to be processed into consideration.

In the equation (2), the development rate factor F of the light-sensitive material can be used in place of the original image ratio D and the density control factor C, thus giving equation (2'):

$$P = a \cdot S[1 + \alpha \times \{\frac{[G \cdot F \cdot A + (1-A)]}{x_0} - 1\}]\beta \cdot \gamma \ldots \quad (2')$$

F: Development Rate Factor of Light-Sensitive Material

Calculated from a quantity of light at the time of exposure, i.e., a quantity of light after control with a filter, decided from the data obtained by the aforesaid pre-scan, the density and the set value of color correction. As the photosensors 43 of the embodiment comprise two each of red (R), green (G), and blue (B), one of two values as to each of R, G, and B is chosen, and the development rate factor of light-sensitive material is obtained from an average of the logarithms of the photometric values. The maximum of the logarithmic photometric value is set at 2.0. An average of the logarithms of photometric values for R, G, and B, taken as E, can be calculated as follows.

That is, in the cases where the color original is photometrically analyzed with its area subject to analysis being divided into n sections as shown in Figure 4, as the photosensor 43 comprises 6 units, the measured values are put into the memory of RAM 76 in a table form. Hence, one of the two values each of R, G, and B is chosen as shown in Table 3, and an average of

logarithms of photometric values of R, G and B, $E_{(R,G,B)1}$ is calculated according to equations shown below.

Table 3

| Section | Photometric Density | | |
|---|---|---|---|
| 1 | $E_{1R1}$ | $E_{1G1}$ | $E_{1B1}$ |
| 2 | $E_{2R1}$ | $E_{2G1}$ | $E_{2B1}$ |
| 3 | $E_{3R1}$ | $E_{3G1}$ | $E_{3B1}$ |
| ⋮ | | | |
| n | $E_{nR1}$ | $E_{nG1}$ | $E_{nB1}$ |

$$E_{R1} = \frac{1}{n}\sum_{n=1}^{n}(E_{nR1}) \quad \ldots\ldots\ldots\ldots\ldots\ldots\ldots (7)$$

$$E_{G1} = \frac{1}{n}\sum_{n=1}^{n}(E_{nG1}) \quad \ldots\ldots\ldots\ldots\ldots\ldots\ldots (8)$$

$$E_{B1} = \frac{1}{n}\sum_{n=1}^{n}(E_{nB1}) \quad \ldots\ldots\ldots\ldots\ldots\ldots\ldots (9)$$

Accordingly,

$$E = 1/3(E_{R1} + E_{G1} + E_{B1}) \quad \ldots\ldots\ldots\ldots (10)$$

$E_{(R,G,B)1}$ = -log(photometric value of original on exposure$_{(R,G,B)1}$/photometric value of exposure amount required for whitening the light-sensitive material$_{(R,G,B)1}$)

......... (7)

The development rate factor F of the light-sensitive material can be calculated from the thus obtained average logarithm of photometric value E.

The relationship between the average logarithm of photometric value E and the development rate factor F of the light-sensitive material is as shown in Figure 6.

In the photometry of this embodiment, when the actual exposure amount is obtained as an average logarithmic photometric value E, the average logarithmic photometric value E linearly shifts as shown by the dotted line if the original has no contrast. When the contrast is strong, there is a relationship $F \fallingdotseq 1-(1/10^{E})$, and the average logarithmic photometric value E forms an expanding curve as shown by the solid line. The curvature of this curve varies depending on the kind of the photometer and the contrast of the original.

In the instant embodiment, the table was prepared taking a direct positive photographic light-sensitive material for instance. Tabulation can be made similarly for a negative color paper.

An appropriate number of objects subject to exposure are sampled at random, and a table of relationship between the average logarithmic photometric values E and development rate factors F of the light-sensitive material was prepared as shown in Figure 7.

In cases where an original to be copied has an extreme inclination so that the development rate factor F of light-sensitive material is deviated from the table shown in Figure 7, it is possible to control replenishment most suitably by appropriate control. Taking the influence of the large volume processing factor $\gamma$ as hereinafter described in consideration, it is preferable to prepare a table of average logarithmic photometric value E vs. light-sensitive material development rate factor F according to the type of the light-sensitive material.

Calculation of the quantity of the replenisher from the above-described parameters is performed successively synchronously with the reproduction of the color original 32 on the light-sensitive material 24 or 26. The quantity of a replenisher thus calculated is integrated, and the replenisher is supplied to the development tank 46 according to the replenishing timing.

The evaporation replenishment is explained below.

The development tank 46 is equipped with a heater for adjusting the temperature of the developer to thereby maintain the developer at the optimum temperature irrespective of whether image recording device 10 is operated or not after turning on the power.

It is necessary therefore to supply a replenisher to make up the heat-evaporation loss of the developer. In this embodiment, it is designed that the developer is replenished when development is not conducted for a prescribed period of time with the power on of the color copying machine. In this case, 0 to 50 ml of the replenisher is sufficient.

The liquid level detection replenishment is explained below. A liquid level of the developer is detected by a float switch fitted to the development tank 46. When the liquid level is found to have been or to get lower than a prescribed level, then the liquid level detection replenishment is effected.

In cases where the float switch is off indicating that the liquid level of the developer in the development tank 46 is lower than a prescribed level at the time of turning on the power of the color copying machine or during non-operation time with the power on, the method of developer replenishment is explained by referring to the flow chart shown in Figure 6.

When the float switch is off, whether replenishment is being conducted or not is judged in step 140. If not, the quantity of a replenisher to be supplied is

calculated in step 142. Since a quantity of the replenisher which can be fed each time by means of pump 171 during normal replenishment is fixed, there is a fraction of the quantity of the replenisher which has not been fed. The fractional quantity, i.e., the requisite quantity of the replenisher is added to an estimated quantity of the replenisher set at a fixed value to obtain the quantity required to be supplied. Then, replenishment is conducted by means of pump 171 in step 144. Subsequently, the quantity of the replenisher supplied by the pump 171 is integrated in step 146. On completion of the replenishment once, it is judged whether the float switch is on or off in step 148. If the float switch is on indicating that the developer has been replenished to reach the prescribed liquid level, the replenishment is stopped. If the float switch is found off in the step 148, it is judged whether or not the integrated quantity of the replenisher in the step 146 exceeds the maximum quantity of the replenisher. The maximum quantity of the replenisher as referred to above is the sum of the evaporation loss of the developer while the power source is off and the offsetting amount of the replenisher for preventing erroneous action of the float switch. When the quantity of the replenisher which has been supplied has not

reached the maximum quantity, replenishment is restarted back to the step 140. When the quantity of the replenisher supplied has exceeded the maximum quantity of the replenisher, an alarm is displayed because of a fear of disorders of the float switch.

The non-operation replenishment is explained below. It is programmed that replenishment be conducted once each time the period of suspension of the color copying machine exceeds 12 hours, and when the power of the color copying machine is turned on, the replenisher is supplied in an amount corresponding to the integrated times of replenishment. One batch of the replenisher is set according to the volume of the pump 171 and the environment of use.

While the foregoing explanation relates to the calculation of the quantity of the developer replenisher to be supplied to the development tank 46, calculation of the quantities of the bleaching solution replenisher and the fixer replenisher to the blix tank 47 is similarly performed.

The action of this embodiment is illustrated by referring to the flow chart of Figure 9.

Magazines 20 to 22 in which each of light-sensitive materials 24 and 26 differing in kind is rolled up are loaded in paper feeding zone 12. On

closure of an open-close lid after loading the magazines 20 and 22, the ends of the light-sensitive materials 24 and 26 are clamped. Then, copying conditions are set by operating elements on the operating panel in step 100. The copying conditions include the number of copies, the size of copying paper, the color density control, the magnification setting, and selection of a light-sensitive material. At the press of a start button (not shown) in step 102, either of light-sensitive materials 24 and 26 is selected, and the selected light-sensitive material is unrolled to a length required and cut to lengths required. The light-sensitive material 24 is then carried to exposure window 28, standing there awaiting for commencement of exposure.

In step 104, pre-scan control is conducted. That is, light source 38 is turned on, the white level value is first photometrically measured, an original is then photometrically measured by means of 6 photosensors 43, and a reflected density D'n is obtained according to equation (1). Density control data are obtained in controlling device 45 on the basis of the reflected density D'n, and subsequent step 106 is then taken.

In step 106, calculation and control of the quantity of a developer replenisher P are made. The

calculation is performed according to equation (2) on the basis of the above-described parameters.

That is, since the quantity of a replenisher is decided taking into consideration all the factors deteriorating a developer during development processing, reliability can be improved over the conventional replenishment system in which the quantity of the replenisher is calculated only from the area of the light-sensitive material to be processed. As a result, the necessity to correct the replenisher amount can be removed, thus improving workability.

In step 108, a color density control mechanism by use of a light controlling filter, etc. functions and, at the same time, the lens position of optical means 42 is altered in proportion to a magnification. On commencement of exposure in step 110, the light-sensitive material 24, while passing by the exposure window 28, is exposed to light from the image of the color original 32 placed on original mount 32 by means of mirror 40 and optical means 42. At the time of exposure, a light controlling filter is inserted in the light passage for a prescribed time to control the exposure amount for each color to thereby improve color reproducibility of the light-sensitive material.

As the exposure proceeds, the light-sensitive material 24 is forwarded downward in Figure 1. At this time, change-over guide 50 is in the state shown by the solid line of Figure 1 so that the light-sensitive material 24 moves from the exposure window 28 vertically downward. The exposed light-sensitive material 24 is thus prevented from loosing at the middle part thereof which may occur if it is directly forwarded into processing zone 16 and produces a difference between a travelling speed in the paper feeding zone 12 and that in the processing zone 16.

After completion of the exposure in the step 110, step 112 is then taken, where the light-sensitive material 24 or 26 is temporarily moved backward. The backward movement stops when the leading end of the light-sensitive material 24 returns to the position upstream the change-over guide 50. Thereafter, the light-sensitive material is again moved to the same direction as the previous moving direction. On this occasion, the change-over guide 50 is in the state shown in Figure 1 by the broken line, and the leading end of the light-sensitive material 24 is delivered to the processing zone 16 to enter into step 112 where development processing is performed.

When it is judged in step 112 that delivery of the light-sensitive material 24 or 26 having reached the processing zone 16 to the processing zone 16 is completed, step 118 is then taken, where it is judged whether the number of copies has reached the set number. If not, the operation is shifted from step 118 back to step 108, and the steps from 108 through 114 are repeated. In cases where plural copies should be taken from one original, the date obtained by the first pre-scan are applied.

When it is judged that all of the set number of copies have been obtained in step 118, the processing comes to end.

Then, another embodiment is illustrated by referring to the flow chart shown in Figure 10. The flow chart of Figure 10 depicts the mode of calculation of the quantity of replenisher based on the development rate factor F of the light-sensitive material according to the aforesaid equation (2'). In what follows, the actions between steps 102 and 110 will be described since the actions before step 102 and after step 110 are the same as shown in Figure 9.

After the light-sensitive material 24 reaches the exposure window 28 where it stands by until exposure is started, pre-scan control (1) is conducted in step

103. That is, the light source 38 is put on, the white level value is photometrically measured, the original is photometrically analyzed by means of the six photosensors 43, and a reflected density D'n is obtained according to equation (1). The controlling device 45 provides automatic exposure controlling data for obtaining the optimum color density based on the reflected density D'n. The operation is then shifted to step 105.

In step 105, a light controlling filter and a stop plate are moved so as to create a condition for actual exposure of the light-sensitive material 24.

In step 107, pre-scan control (2) is conducted under the above-described exposure condition to determine the exposure amount for the light-sensitive material 24.

In step 109, calculative control of the quantity of the developer replenisher is conducted based on the above-described various parameters according to equation (2').

In other words, since the quantity of a replenisher is decided taking into consideration all the factors causing deterioration of the developer during development processing, reliability can be improved over the conventional replenishment system in which the

quantity of the replenisher is calculated solely from the area to be processed. As a result, there is no need to correct the quantity of a replenisher, thereby improving workability. Further, wasteful over-replenishment of the developer can be avoided, producing a great effect on developer saving.

On making a start in exposing in step 110, the light-sensitive material 24 passing by the exposure window 28 is exposed to light of the image of the color original 32 on the original mount 30 by means of the mirror 40 and the optical means 42. At the time of exposure, a light controlling filter and a stop are inserted in the light passageway for a prescribed period of time [they have been inserted at the time of the pre-scan (2)] to control the exposure amount for each color, thereby improving color reproducibility of the light-sensitive material.

The replenishment control will be explained in accordance with the flow chart shown in Figure 11. This routine is a regular one always taking place in several second intervals.

At first in step 120, the quantity of a replenisher P calculated from the above-described equation (2) or (2') is read, and whether replenishment should be done or not is judged in the subsequent step

122. This judgement may be compared with a predetermined level, or replenishment may be performed at constant intervals.

In the subsequent step 124, whether it is the timeing for replenishment of a replenisher or not is judged. No abrupt deterioration of the processing solution occurs as far as a few copies of the color original 32 are processed, so that the judgement may be made immediately before or immediately after copying processing or during the processing, but it is preferable to previously fix the judging timing.

If it is judged in step 124 not to be timing for replenishment, this routine completes. If it is judged to be timing for replenishment, the operation is shifted to step 126 where the read quantity of the replenisher P is reset, and then to step 128 where replenishing action is taken. When completion of the supply of the prescribed amount of the replenisher is judged in step 130, the routine completes.

The cleaning of the roller carrying the light-sensitive material within the processing zone 16 is illustrated below.

The surface of the pairs of rollers 181 to 187 which carry the light-sensitive material 24 or 26 from development tank 46, blix tank 47 through washing tanks

48 and 49 gets contaminated according as the processing solution having been used for processing sticks thereto and is dried. The contaminant is transferred to the light-sensitive material 24 or 26 in the subsequent processing step to contaminate the light-sensitive material, adversely affecting image quality. It is therefore necessary to appropriately clean the carriage rollers 181 to 187 after the processing.

In the color copying machine of this embodiment, it is designed to clean the rollers when the power is turned off. However, in such a situation that the electric source is cut off so frequently for electric power saving, it would be sometimes wasteful if the rollers are cleaned each time the power source is switched off. It is therefore designed that the rollers are cleaned only when a prescribed period of time has passed since the previous switch-off followed by roller cleaning.

The method of cleaning the rollers is explained with reference to the flow chart shown in Figure 12.

RAM 76 of the controlling device 45 has a memory of the time of the latest roller cleaning. On switching off the power, the time having passed since the latest roller cleaning is determined in step 160. In the case when n hours has not yet passed since the previous

cleaning, the power of color copying machine is cut off to stop the operation without cleaning the rollers. If it is judged that n hours have passed since the previous cleaning in step 160, whether processing such as development, blix, and washing has been performed during the n hours is then judged in step 162. In the case where the color copying machine has been merely charged with electricity without any operation of processing, the power source of the color copying machine is cut off to stop the operation without roller cleaning. In the case where any processing has been carried out, the rollers are cleaned in step 164. The time when the roller cleaning is conducted this time is put into the memory of RAM 76 in step 166, and the power source of the color copying machine is then cut off to stop the operation. In this embodiment, the time n for making judgement of roller cleaning is from 6 to 8 hours.

The silver salt photographic system color copying machine as stated above is mostly used in offices and the like. The method of the present invention eliminates bothering tasks, such as exchange of liquids in the development tank, the blix tank, etc. at short intervals and periodical monitoring of the finish of copies, whereby maintenance of the processing solutions that is relatively disliked by an operator is

thus made easier, showing operating properties similar to the commonly employed copying machines in which an original is reproduced by the use of a toner.

Hence, in the above-described embodiments, even on processing a light-sensitive material having been exposed to light of objects having a variety of conditions (particularly originals having partialities), stable developing conditions can be maintained for an extended period of time to provide copies or prints with a best and scatter-free finish. These embodiments are especially effective in color copying machines or the like systems in which a wide variety of objects including a lettering original, an image original, and a three-dimensional original are subject to exposure for copying.

In the embodiments, photosensors are used also for serving as a photometric system for pre-scan, but mere silicone sensors may be used apart from the photometric system. Line sensors or area sensors, e.g., CCD, may also be used.

Since the mount for placing an original used in the silver salt photographic system color copying machine adopted in the embodiments is of center resist type, and the characteristic image is therefore placed in the vicinity of the center, the central part of the

original is subjected to photometry within a slit frame. It is also possible to use photometric data of the entire area of the original or any characteristic part sampled.

Further, while in the embodiments the reflected density from the color original 32 is measured, the density of an image may also be obtained by photometry of transmitted light in cases of using negative films as color original. In using such an apparatus (printer), an exposure zone and a processing zone are sometimes remoted from each other. Such being the case, the data for control can be transferred by the use of a communication means, e.g., RS-232C communication, or a memory medium, e.g., a floppy disc and a paper tape.

EXAMPLES

The present invention is now illustrated by way of examples.

[Preparation of Direct Positive Color Photographic Light-sensitive Material A-1]

A color photographic light-sensitive material comprising a polyethylene-laminated (on both sides) paper support (thickness: 100 μm) having coated in multilayers on the surface side thereof 1st to 14th layers shown below and on the back side thereof 15th to 16th layers shown below was prepared. The polyethylene

layer on the side to be coated with the 1st layer contains titanium oxide as a white pigment and a trace amount of ultramarine as a bluish dye (the chromaticity of the surface of the support according to L*,a*,b* system was 88.0, -0.20, and -0.75).

(Composition of Light-Sensitive Layers)

The components and spreads (unit: $g/m^2$, hereinafter the same) are shown below. With reference to silver halides, silver convertion coverages are shown. The emulsion used in each layer was prepared in accordance with the method for preparing an emulsion EM 1, provided that the emulsion used in the 14th layer was a Lippmann emulsion not having been subjected to surface chemical sensitization.

1st Layer: Antihalation Layer

| | |
|---|---|
| Black colloidal silver | 0.10 |
| Gelatin | 0.70 |

2nd Layer: Intermediate Layer

| | |
|---|---|
| Gelatin | 0.70 |

3rd Layer: Low Sensitivity Red-Sensitive Layer

| | |
|---|---|
| Silver bromide (mean grain size: 0.25 µm; size distribution (coefficient of variation): 13%; octahedron) spectrally sensitized with red sensitizing dyes (ExS-1, 2, and 3) | 0.04 |
| Silver bromide (mean grain size: 0.40 µm; size distribution: 10%; octahedron) | 0.07 |

| | |
|---|---|
| spectrally sensitized with red-sensitizing dyes (ExS-1, 2, and 3) | |
| Gelatin | 0.51 |
| Cyan coupler (ExC-1, 2, and 3 at a ratio of 1:1:0.2) | 0.30 |
| Discoloration inhibitor (Cpd-1, 2, 3, and 4 at equal ratios) | 0.18 |
| Stain inhibitor (Cpd-5) | 0.003 |
| Coupler dispersing medium (Cpd-6) | 0.03 |
| Coupler solvent (Solv-1, 2, and 3 at equal ratios) | 0.10 |

4th Layer: High Sensitivity Red-Sensitive Layer

| | |
|---|---|
| Silver bromide (mean grain size: 0.60 µm; size distribution: 11%; octahedron) spectrally sensitized with red-sensitizing dyes (ExS-1, 2, and 3) | 0.14 |
| Gelatin | 0.64 |
| Cyan coupler (ExC-1, 2, and 3 at a ratio of 1:1:0.2) | 0.38 |
| Discoloration inhibitor (Cpd-1, 2, 3, and 4 at equal ratios) | 0.23 |
| Coupler dispersing medium (Cpd-6) | 0.04 |
| Coupler solvent (Solv-1, 2, and 3 at equal ratios) | 0.29 |

5th Layer: Intermediate Layer

| | |
|---|---|
| Gelatin | 1.19 |
| Color mixing inhibitor (Cpd-7) | 0.18 |
| Color mixing inhibitor solvent (Solv-4 and 5 at equal ratios) | 0.16 |
| Polymer latex (Cpd-8) | 0.10 |

6th Layer: Low Sensitivity Green-Sensitive Layer

| | |
|---|---|
| Silver bromide (mean grain size: 0.25 μm; size distribution: 13%; octahedron) spectrally sensitized with green sensitizing dye (ExS-4) | 0.04 |
| Silver chlorobromide (mean grain size: 0.43 μm; size distribution: 11%; octahedron) spectrally sensitized with green sensitizing dye (ExS-4) | 0.06 |
| Gelatin | 0.67 |
| Magenta coupler (ExM-1, 2, and 3 at equal ratios) | 0.11 |
| Discoloration inhibitor (Cpd-9 and 26 at equal ratios) | 0.15 |
| Stain inhibitor (Cpd-10, 11, 12, and 13 at a ratio of 10:7:7:1) | 0.025 |
| Coupler dispersing medium (Cpd-6) | 0.05 |
| Coupler solvent (Solv-4 and 6 at equal ratios) | 0.15 |

7th Layer: High Sensitivity Green-Sensitive Layer

| | |
|---|---|
| Silver bromide (mean grain size: 0.71 μm; size distribution: 10%; octahedron) spectrally sensitized with green sensitizing dye (ExS-4) | 0.12 |
| Gelatin | 0.74 |
| Magenta coupler (ExM-1, 2, and 3 at equal ratios) | 0.11 |
| Discoloration inhibitor (Cpd-9 and 26 at equal ratios) | 0.15 |
| Stain inhibitor (Cpd-10, 11, 12, and 13 at a ratio of 10:7:7:1) | 0.025 |
| Coupler dispersing medium (Cpd-6) | 0.05 |

| | |
|---|---|
| Coupler solvent (Solv-4 and 6 at equal ratios) | 0.15 |

8th Layer: Intermediate Layer

| | |
|---|---|
| Gelatin | 0.48 |
| Color mixing inhibitor (Cpd-7) | 0.03 |
| Color mixing inhibitor solvent (Solv-4 and 5 at equal ratios) | 0.05 |

9th Layer: Yellow Filter Layer

| | |
|---|---|
| Yellow colloidal silver | 0.18 |
| Gelatin | 0.73 |
| Color mixing inhibitor (Cpd-7) | 0.03 |
| Color mixing inhibitor solvent (Solv-4 and 5 at equal ratios) | 0.10 |
| Polymer latex (Cpd-8) | 0.07 |

10th Layer: Intermediate Layer

The same as the 9th layer.

11th Layer: Low Sensitivity Blue-Sensitive Layer

| | |
|---|---|
| Silver bromide (mean grain size: 0.38 μm; size distribution: 16%; octahedron) spectrally sensitized with blue sensitizing dyes (ExS-5 and 7) | 0.08 |
| Silver bromide (mean grain size: 0.64 μm; size distribution: 13%; octahedron) spectrally sensitized with blue sensitizing dyes (ExS-5 and 7) | 0.09 |
| Gelatin | 0.47 |
| Yellow coupler (ExY-1 and 2 at equal ratios) | 0.35 |
| Discoloration inhibitor (Cpd-14) | 0.10 |

| | |
|---|---|
| Stain inhibitor (Cpd-5 and 15 at a ratio of 1:5) | 0.007 |
| Coupler dispersing medium (Cpd-6) | 0.05 |
| Coupler solvent (Solv-2) | 0.10 |

<u>12th Layer</u>: High Sensitivity Blue-Sensitive Layer

| | |
|---|---|
| Silver bromide (mean grain size: 0.90 μm; size distribution: 11%; octahedron) spectrally sensitized with blue sensitizing dyes (ExS-5 and 6) | 0.22 |
| Gelatin | 0.60 |
| Yellow coupler (ExY-1 and 2 at equal ratios) | 0.30 |
| Discoloration inhibitor (Cpd-14) | 0.10 |
| Stain inhibitor (Cpd-5 and 15 at a ratio of 1:5) | 0.007 |
| Coupler dispersing medium (Cpd-6) | 0.05 |
| Coupler solvent (Solv-2) | 0.10 |

<u>13th Layer</u>: Ultraviolet Absorbing Layer

| | |
|---|---|
| Gelatin (Cpd-2, 4, and 16 at equal ratios) | 0.27 |
| Ultraviolet absorbent (Cpd-7 and 17 at equal ratios) | 0.03 |
| Dispersing medium (Cpd-6) | 0.02 |
| Ultraviolet absorbent solvent (Solv-2 and 7 at equal ratios) | 0.08 |
| Anti-irradiation dye (Cpd-18, 19, 20, 21, and 27 at a ratio of 10:10:13:15:20) | 0.05 |

<u>14th Layer</u>: Protective Layer

| | |
|---|---|
| Fine silver chlorobromide grains (silver chloride: 97 mol%; mean grain size: 0.1 µm) | 0.02 |
| Acryl-modified copolymer of polyvinyl alcohol | 0.01 |
| Polymethyl methacrylate particles (mean particle size: 2.4 µm) and silicon oxide (mean particle size: 5 µm) | 0.03 |
| Gelatin | 1.17 |
| Gelatin hardening agent (H-1 and 2 at equal ratios) | 0.18 |

<u>15th Layer</u>: Backing Layer

| | |
|---|---|
| Gelatin | 4.15 |
| Ultraviolet absorbent (Cpd-2, 4, and 16 at equal ratios) | 0.50 |
| Dye (Cpd-18, 19, 20, 21 and 27 at equal ratios) | 0.06 |

<u>16th Layer</u>: Back Protective Layer

| | |
|---|---|
| Polymethyl methacrylate particles (average particle size: 2.4 µm) and silicon oxide (mean particle size: 5 µm) at equal ratios | 0.04 |
| Gelatin | 1.15 |
| Gelatin hardening agent (H-1 and 2 at equal ratios) | 0.53 |

Preparation of Emulsion EM-1

An aqueous solution of potassium bromide and an aqueous solution of silver nitrate were simultaneously added to an aqueous gelatin solution containing 0.71 g,

per mol of silver of the core, of 3,4-dimethyl-1,3-thiazoline-2-thione at 75°C while vigorously stirring over a period of 7 minutes to obtain octahedral silver bromide grains having a mean grain size of 0.42 μm. To the emulsion were successively added 82 mg of sodium thiosulfate and 54 mg of chloroauric acid (tetrahydrate), followed by heating at 75°C for 80 minutes to effect chemical sensitization. The thus obtained grains were used as a core and allowed to grow under the same precipitation environment as in the previous grain formation to finally obtain a monodisperse octahedral core/shell silver bromide emulsion having a mean grain size of 0.9 μm. The coefficient of variation of the grain size was about 11%. To the emulsion were added 1.6 mg of sodium thiosulfate and 1.6 mg of chloroauric acid (tetrahydrate) each per mol of silver, followed by heating at 60°C for 60 minutes to effect chemical sensitization to obtain an internal latent image type silver halide emulsion.

Each of the light-sensitive layers further contained $8\times10^{-3}$% by weight of ExZK-1 as a nucleating agent and $10^{-1}$% by weight of Cpd-22 as a nucleation accelerator each based on silver halide. Furthermore, each layer contains Alkanol XC (produced by DuPont) and a sodium alkylbenzenesulfonate as emulsifying and dispersing assistant, a succinic ester and Magefac F-120 (produced by Dai-nippon Ink & Chemicals, Inc.) as coating aid. In the silver halide- or colloidal silver-containing layers, Cpd-23, 24, and 25 were used as stabilizer. The compounds used in this example are shown below.

ExS-1

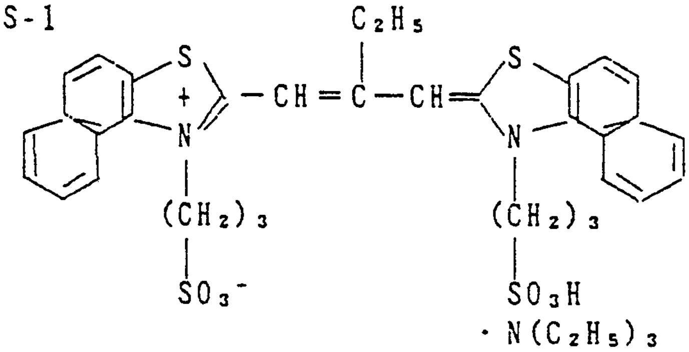

ExS-2

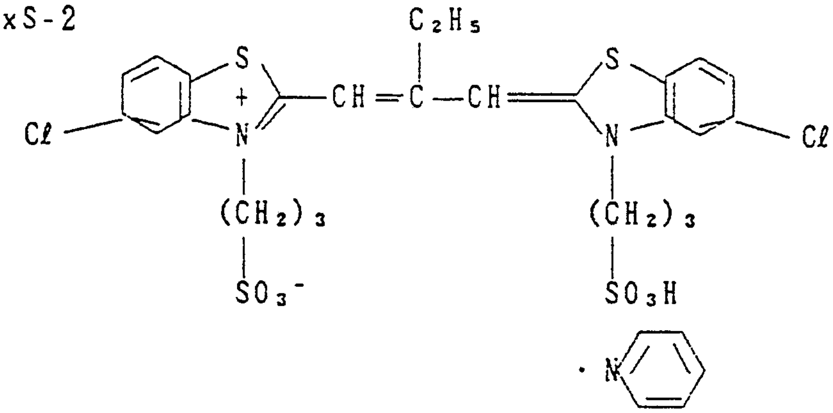

ExS-3

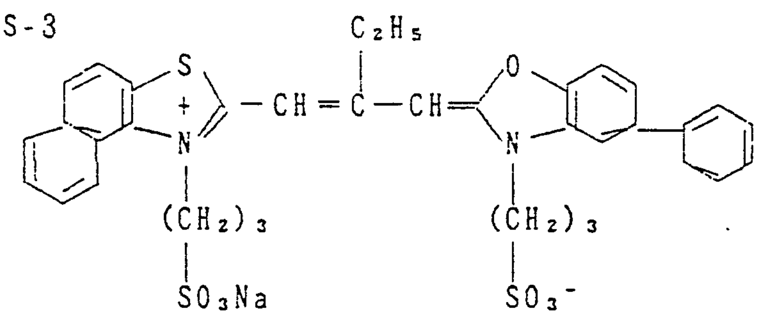

ExS-4

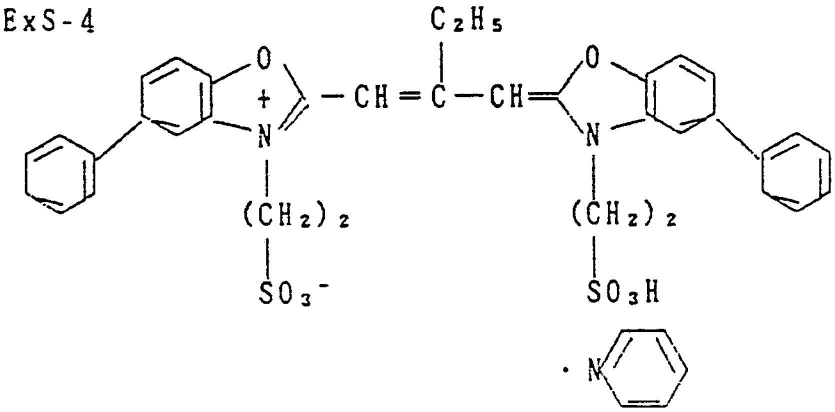

ExS-5

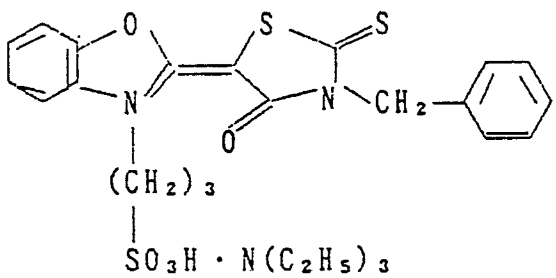

ExS-6

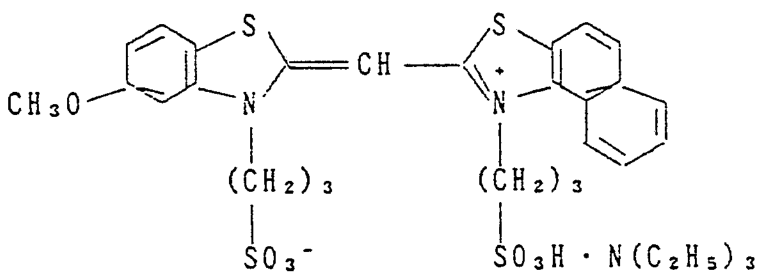

ExS-7

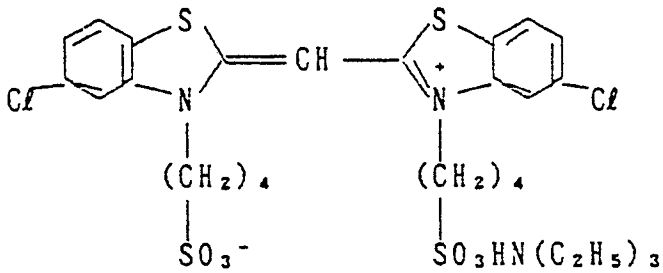

Cpd-1

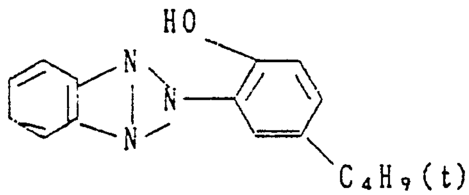

Cpd-2

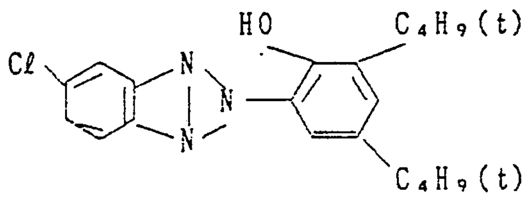

Cpd-3

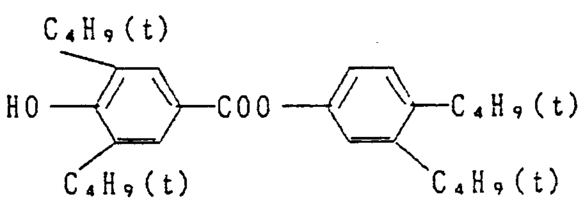

Cpd-4

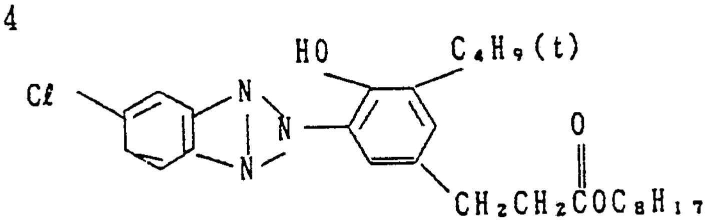

Cpd-5

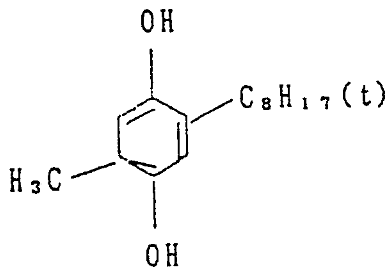

Cpd-6

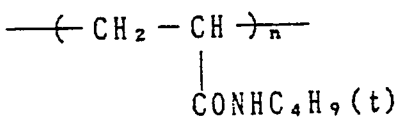

n=100～1000

Cpd-7

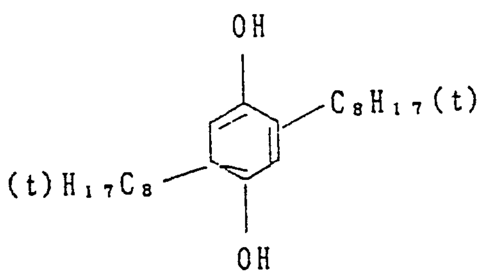

Cpd-8

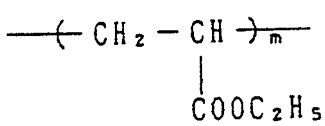

Cpd-9

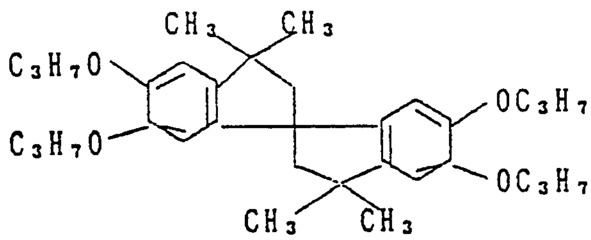

Cpd-10

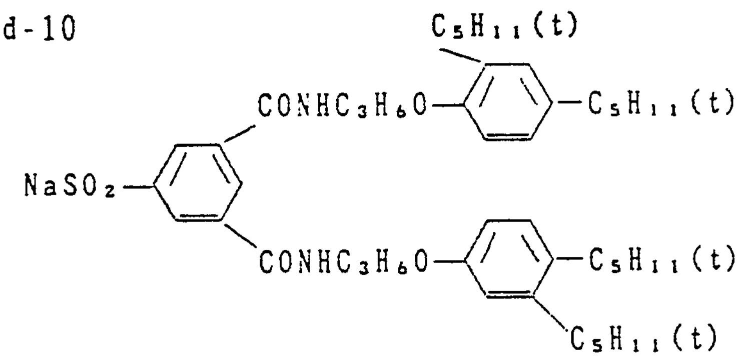

Cpd-11

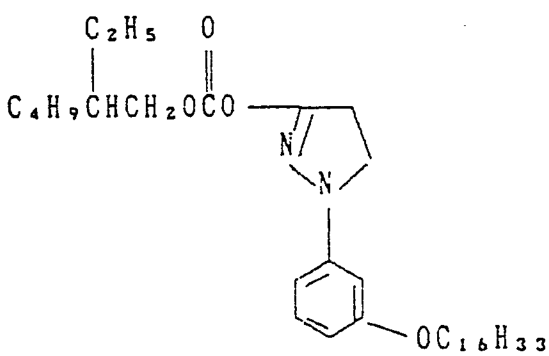

Cpd-12

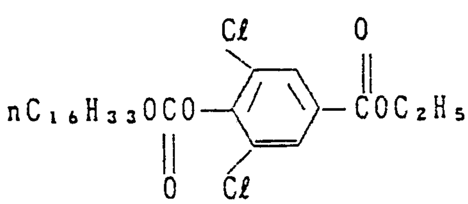

Cpd-13

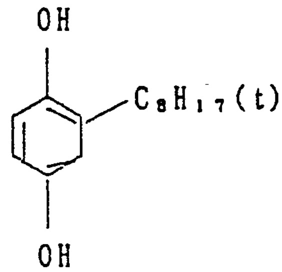

Cpd-14

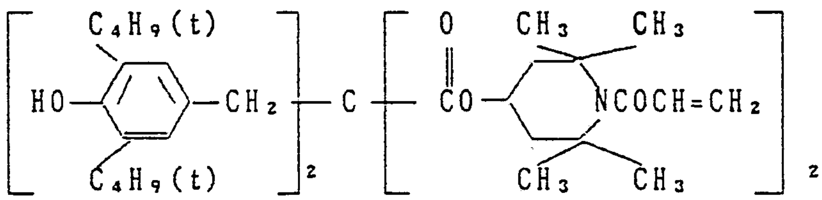

Cpd-15

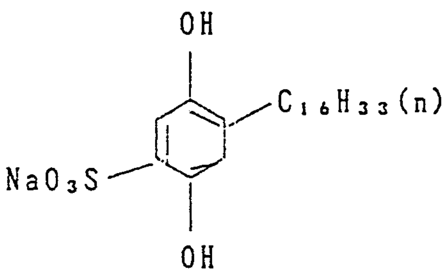

Cpd-16

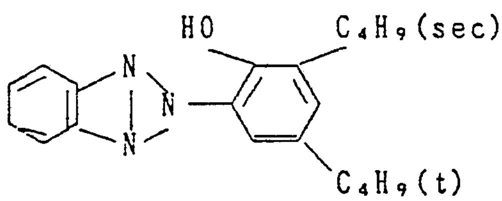

Cpd-17

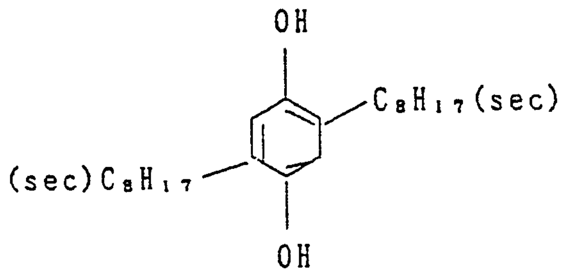

Cpd-18

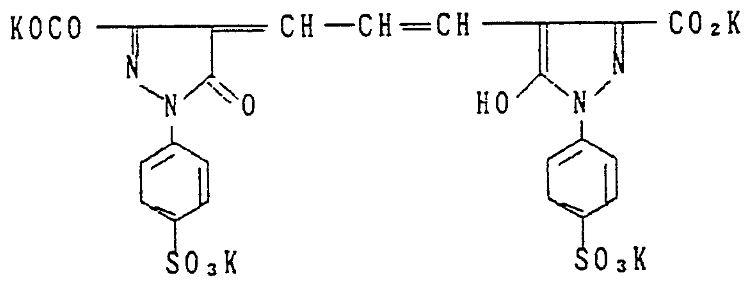

Cpd-19

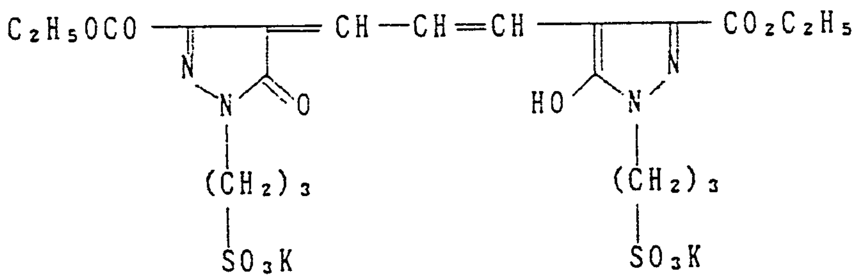

Cpd-20

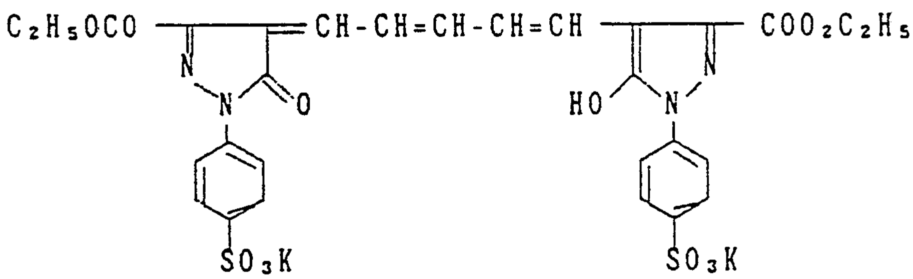

Cpd-21

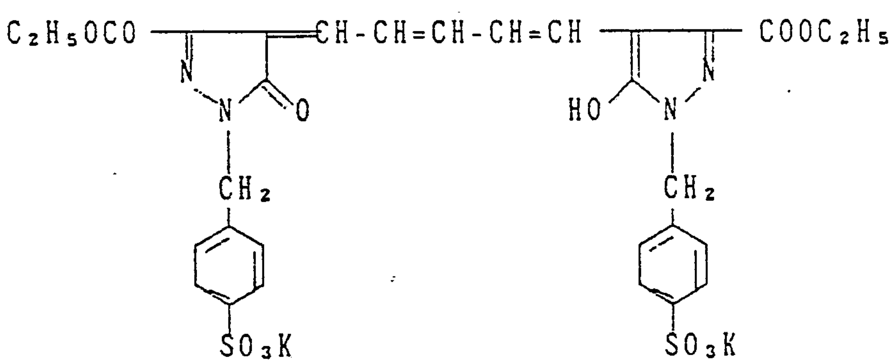

Cpd-22

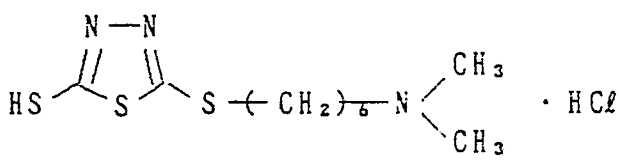

Cpd-23

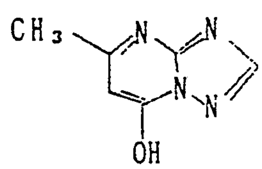

Cpd-24

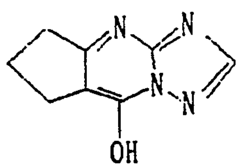

Cpd-25

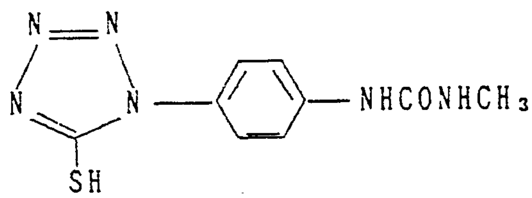

Cpd-26

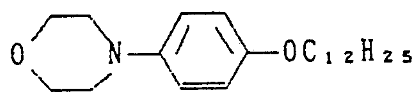

Cpd-27

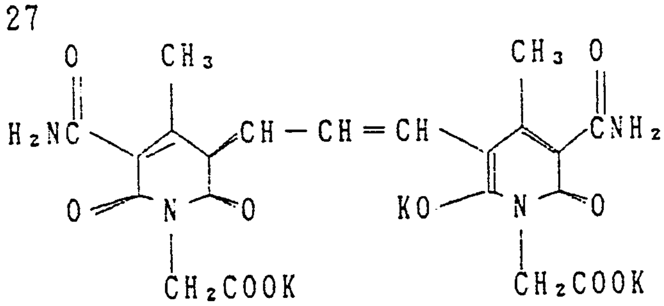

ExC-1

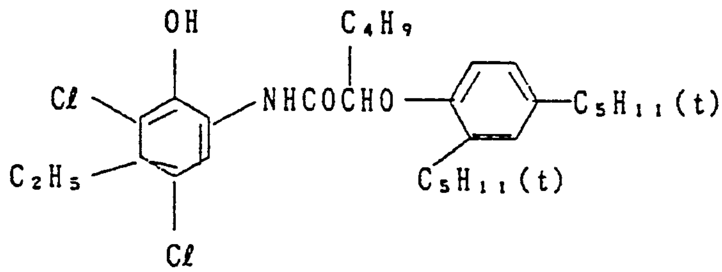

ExC-2

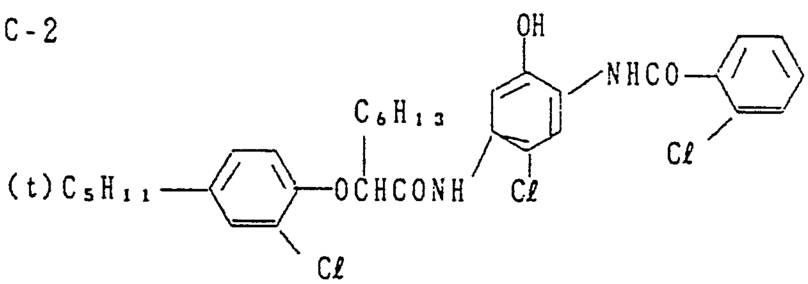

ExC-3

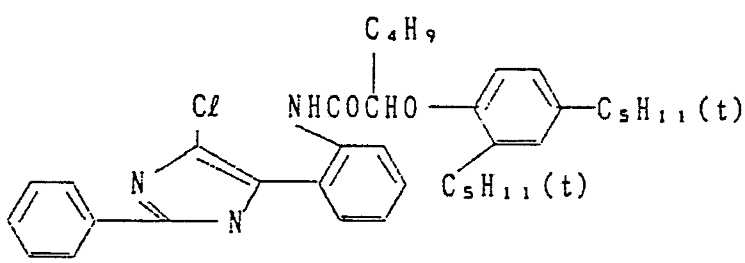

ExM-1

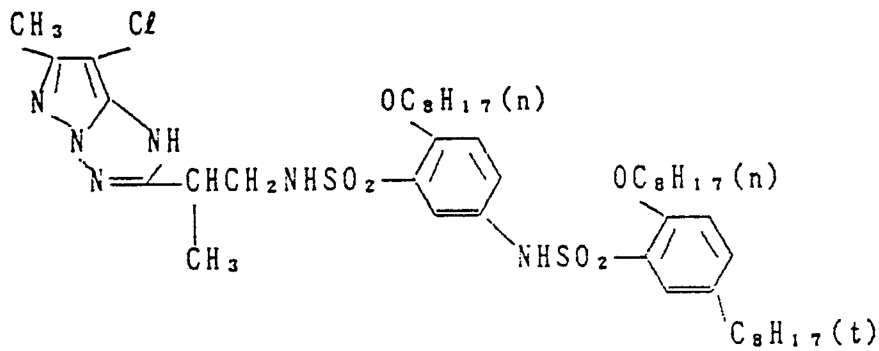

ExM-2

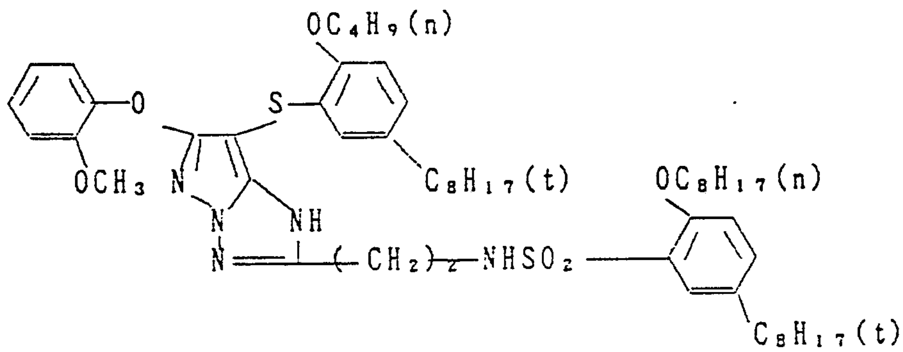

EXM-3

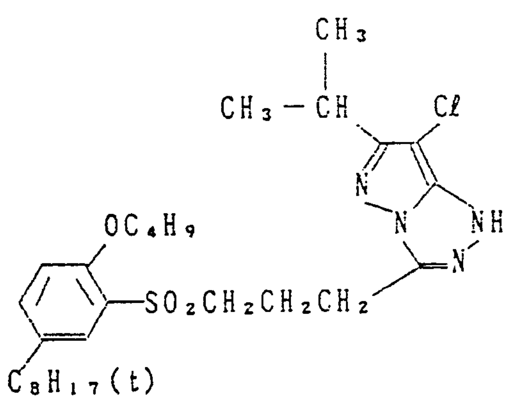

ExY-1

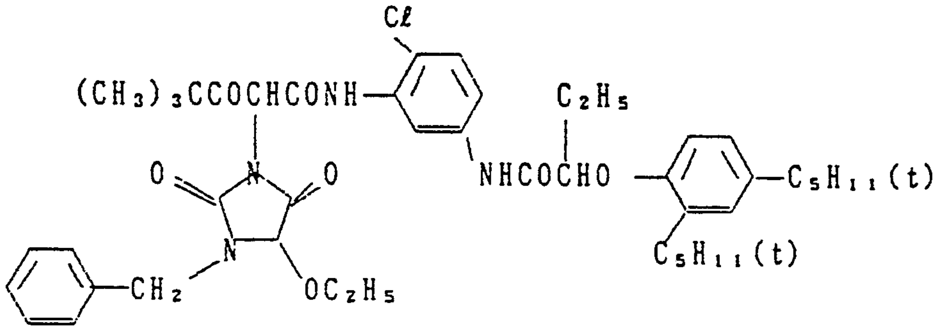

EXY-2

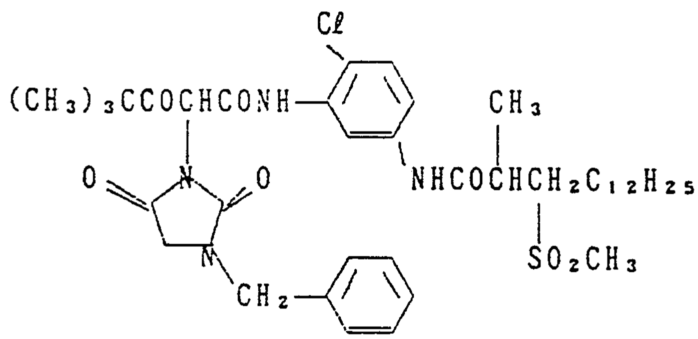

Solv-1 Di(2-ethylhexyl) sebacate

Solv-2 Trinonyl phosphate

Solv-3 Di(3-methylhexyl) phthalate

Solv-4 Tricresyl phosphate

Solv-5 Dibutyl phthalate

Solv-6 Trioctyl phosphate

Solv-7 Di(2-ethylhexyl) phthalate

H-1 1,2-Bis(vinylsulfonylacetamido)ethane

H-2 4,6-Dichloro-2-hydroxy-1,3,5-triazine sodium salt

ExZK-1 7-(3-Ethoxythiocarbonylaminobenzamido)-9-methyl-10-propargyl-1,2,3,4-tetrahydroacridinium trifluoromethane sulfonate

[Preparation of Negative Color Paper C-1]

A multi-layer color paper comprising a polyethylene-laminated (on both sides) paper support having provided thereon the following layers was prepared.

Preparation of Coating Composition of 1st Layer:

To 19.1 g of a yellow coupler (ExY-1) and 4.4 g and 1.8 g of dye image stabilizers (Cpd-14) and (Cpd-6), respectively, were added 27.2 ml of ethyl acetate and 4.1 g each of solvents (Solv-2) and (Solv-8) and dissolved. The resulting solution was emulsified and dispersed in 185 ml of a 10% aqueous gelatin solution containing 8 ml of 10% sodium dodecylbenzenesulfonate. Separately, a silver chlorobromide emulsion [silver bromide: 80.0 mol%; cubes; a 1:3 (Ag molar ratio) blend of grains having a mean grain size of 0.85 μm and grains having a mean grain size of 0.62 μm; coefficient of variation: 0.08 and 0.07] was subjected to sulfur sensitization, and a blue sensitizing dye ExS-7 was added thereto in an amount of $5.0\times10^{-4}$ mols per mol of silver. The aforesaid dispersion and the emulsion were

mixed and dissolved to prepare a coating composition for the 1st layer having the following composition. Coating compositions for the 2nd to 7th layers were prepared in the same manner as for the 1st layer. In each layer, H-2 was used as a gelatin hardening agent.

The following spectrally sensitizing dyes were used in the respective layers.

Blue-Sensitive Emulsion Layer:

ExS-7

($5.0 \times 10^{-4}$ mol per mol of silver halide)

Green-Sensitive Emulsion Layer:

ExS-8

($4.0 \times 10^{-4}$ mol per mol of silver halide), and

ExS-9

($7.0 \times 10^{-5}$ mol per mol of silver halide)

Red-Sensitive Emulsion Layer:

ExS-10

($0.9 \times 10^{-4}$ mol per mol of silver halide)

To the red-sensitive emulsion layer was added Cpd-28 in an amount of $2.6 \times 10^{-3}$ mol per mol of silver halide.

To each of the blue-, green-, and red-sensitive emulsion layers were added Cpd-25 in an amount of $4.0 \times 10^{-6}$ mol, $3.0 \times 10^{-5}$ mol, or $1.0 \times 10^{-5}$ mol,

respectively, and Cpd-5 in an amount of $8.0 \times 10^{-3}$ mol, $2.0 \times 10^{-2}$ mol, or $2.0 \times 10^{-2}$ mol, respectively, each per mol of silver halide.

To each of the blue- and green-sensitive emulsion layers was added Cpd-23 in an amount of $1.2 \times 10^{-2}$ mol or $1.0 \times 10^{-2}$ mol, respectively, per mol of silver halide.

For prevention of irradiation, Cpd-29 and Cpd-30 were added to each of the emulsion layers.

(Layer Structure)

The composition of each layer is shown below. The figures indicate the respective spread ($g/m^2$). The spread of the silver halide emulsion is expressed on the basis of silver conversion.

Support:

Polyethylene laminated paper [containing a white pigment ($TiO_3$) and a bluish dye (ultramarine) in the polyethylene layer on the side to be coated with the 1st layer]

1st Layer:

| | |
|---|---|
| Silver halide emulsion (AgBr: 80 mol%) | 0.26 |
| Gelatin | 1.83 |
| Yellow coupler (ExY-1) | 0.83 |
| Dye image stabilizer (Cpd-14) | 0.19 |
| Dye image stabilizer (Cpd-6) | 0.08 |

| | |
|---|---|
| Solvent (Solv-2) | 0.35 |
| Solvent (Solv-8) | 0.18 |
| 2nd Layer: Color Mixing Preventing Layer | |
| Gelatin | 0.99 |
| Color mixing inhibitor (Cpd-31) | 0.08 |
| Solvent (Solv-5) | 0.16 |
| Solvent (Solv-4) | 0.08 |
| 3rd Layer: Green-Sensitive Layer | |
| Silver halide emulsion (AgBr: 90 mol%; cubes; a 1:1 blend (Ag molar ratio) of grains having a mean grain size of 0.47 µm and grains having a mean grain size of 0.36 µm; coefficient of variation: 0.12 and 0.09) | 0.16 |
| Gelatin | 1.79 |
| Magenta coupler (ExM-4) | 0.32 |
| Dye image stabilizer (Cpd-9) | 0.20 |
| Dye image stabilizer (Cpd-10) | 0.03 |
| Dye image stabilizer (Cpd-32) | 0.01 |
| Dye image stabilizer (Cpd-12) | 0.04 |
| Solvent (Solv-9) | 0.65 |
| 4th Layer: Ultraviolet Absorbing Layer | |
| Gelatin | 1.58 |
| Ultraviolet absorbent (UV-1) | 0.47 |
| Color mixing inhibitor (Cpd-7) | 0.05 |
| Solvent (Solv-10) | 0.24 |

5th Layer: Red-Sensitive Layer

| | |
|---|---|
| Silver halide emulsion [AgBr: 70 mol%; cubes; a 1:2 blend (Ag molar ratio) of grains having a mean grain size of 0.49 µm and grains having a mean grain size of 0.34 µm; coefficient of variation: 0.08 and 0.10] | 0.23 |
| Gelatin | 1.34 |
| Cyan coupler (ExC-4) | 0.30 |
| Dye image stabilizer (Cpd-31) | 0.17 |
| Dye image stabilizer (Cpd-6) | 0.40 |
| Solvent (Solv-8) | 0.20 |

6th Layer: Ultraviolet Absorbing Layer

| | |
|---|---|
| Gelatin | 0.53 |
| Ultraviolet absorbent (UV-1) | 0.16 |
| Color mixing inhibitor (Cpd-7) | 0.02 |
| Solvent (Solv-10) | 0.08 |

7th Layer: Protective Layer

| | |
|---|---|
| Gelatin | 1.33 |
| Acryl-modified copolymer of polyvinyl alcohol (degree of modification: 17%) | 0.17 |
| Liquid paraffin | 0.03 |

ExS-8

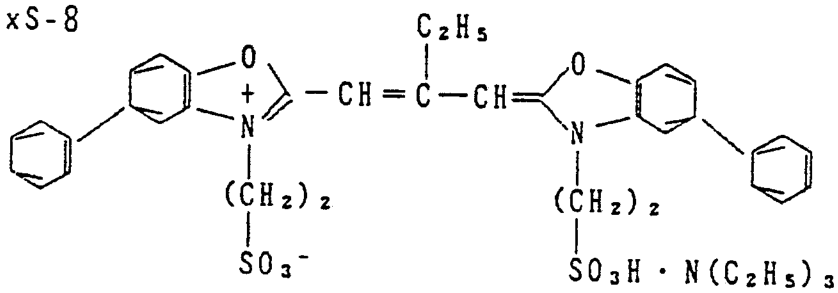

ExS-9

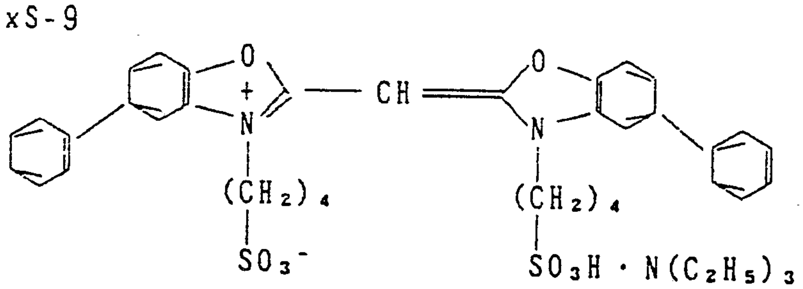

ExS-10

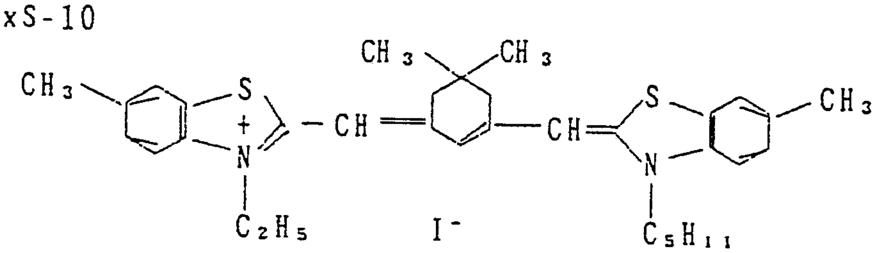

Cpd-28

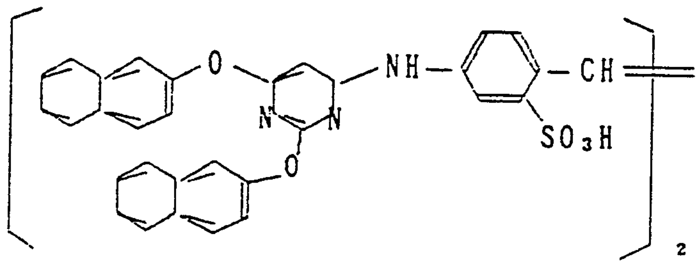

Cpd-29

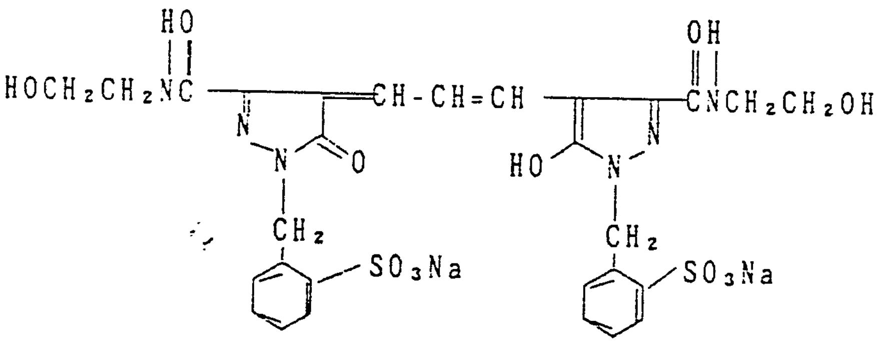

Cpd-30

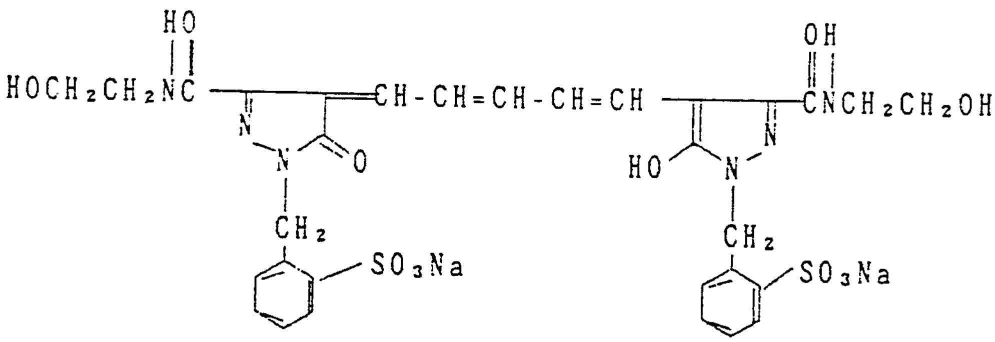

Cpd-31

A 2:4:4 mixture (by weight) of

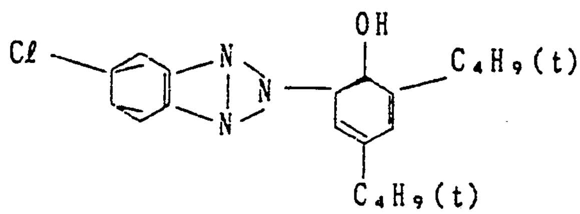

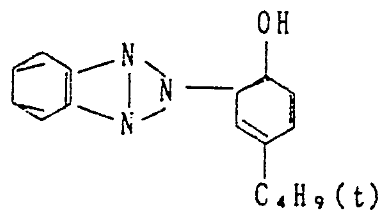

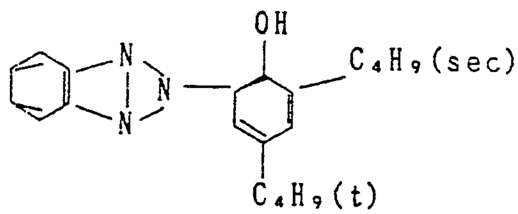

Cpd-32

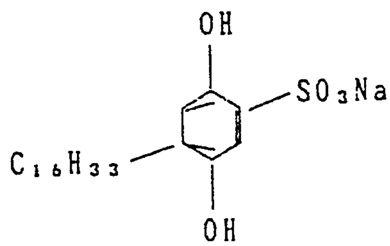

Solv-8

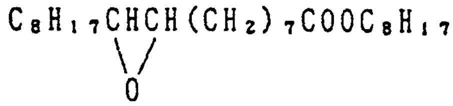

Solv-9

A 2:1 (by volume) mixture of

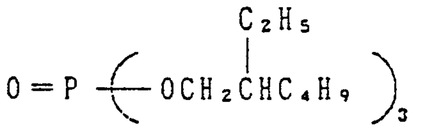

,

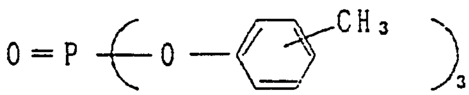

Solv-10

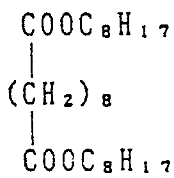

UV-1

A 4:2:4 (by weight) mixture of

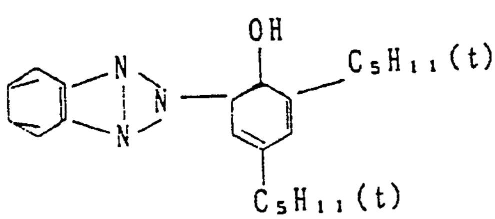

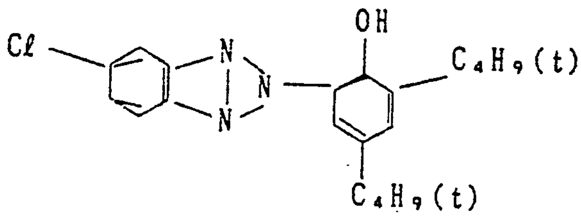

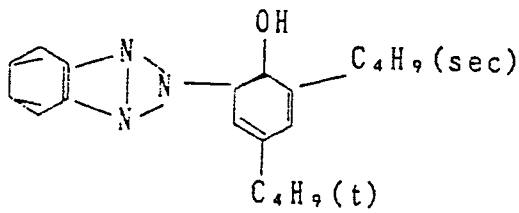

ExM-4

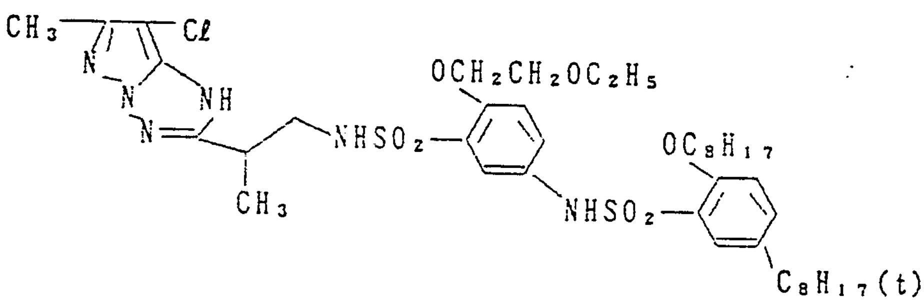

ExC-4

A 1:1 (by mole) mixture of

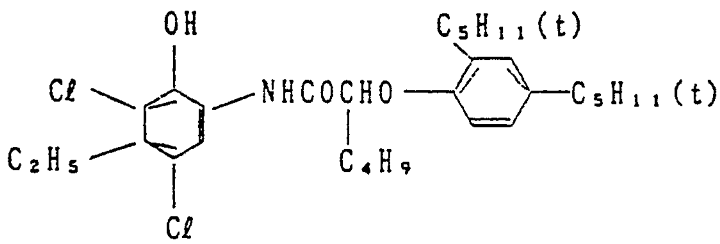

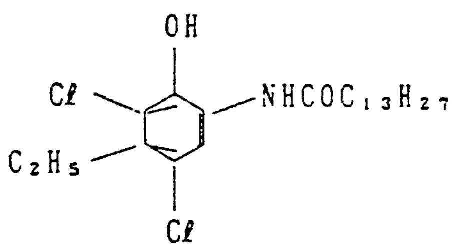

The thus prepared silver halide color photographic material was imagewise exposed to light and then subjected to continuous processing by the use of an automatic developing machine according to the following procedure.

| Processing Step | Time | Temp. | Volume of Tank Solution | Quantity of Reprenisher |
|---|---|---|---|---|
| Color Development | 135" | 38°C | 15 ℓ | 18.8 ml/A4 |
| Blix | 40" | 33°C | 3 ℓ | 18.8 ml/A4 |
| Washing (1) | 40" | 33°C | 3 ℓ | |
| Washing (2) | 40" | 33°C | 3 ℓ | 20.0 ml/A4 |
| Drying | 30" | 80°C | | |

The washing water was replenished by a so-called counter-current system in which the washing water is replenished to the washing bath (2) and the overflow from the washing bath (2) is lead to the washing bath (1). In this case, the amount of the blix solution which was carried over from the blix bath to the washing bath (1) by the photographic material was 35 $ml/m^2$, the quantity of a replenisher of the washing water being 9.1 times the amount of the blix solution carried over.

The respective processing solution has the following composition.

Color Developer

| | Tank Solution | Replen-isher |
|---|---|---|
| D-Sorbitol | 0.15 g | 0.20 g |
| Sodium naphthalenesulfonate-formalin condensate | 0.15 g | 0.20 g |
| Ethylenediaminetetrakis-methylenesulfonic acid | 1.5 g | 1.5 g |

| | | |
|---|---|---|
| Diethylene glycol | 12.0 ml | 12.0 ml |
| Benzyl alcohol | 13.5 ml | 18.0 ml |
| Potassium bromide | 0.80 g | 0.80 g |
| Benzotriazole | 0.003 g | 0.004 g |
| Sodium sulfite | 2.4 g | 3.2 g |
| N,N-Bis(carboxymethyl)hydrazine | 6.0 g | 8.0 g |
| D-Glucose | 2.0 g | 2.4 g |
| Triethanolamine | 6.0 g | 8.0 g |
| N-Ethyl-N-(methanesulfonamidoethyl)-3-methyl-4-aminoaniline sulfate | 6.4 g | 8.5 g |
| Potassium carbonatel | 30.0 g | 25.0 g |
| Brightening agent (diaminostilbene type) | 1.0 g | 1.2 g |
| Water to make | 1000 ml | 1000 ml |
| pH (25°C) | 10.25 | 10.75 |

Blix Solution

| | Tank Solution | Replenisher |
|---|---|---|
| Disodium ethylenediaminetetraacetate dihydrate | 4.0 g | the same as the tank solution |
| Ammonium ethylenediaminetetraacetato iron(III) dihydrate | 70.0 g | do |
| Ammonium thiosulfate (700 g/ℓ) | 180 ml | do |
| Sodium p-toluenesulfinate | 20.0 g | do |
| Sodium bisulfite | 20.0 g | do |
| 5-Mercapto-1,3,4-triazole | 0.5 g | do |

| | | |
|---|---|---|
| Ammonium sulfate | 10.0 g | do |
| Water to make | 1000 ml | |
| pH (25°C) | 6.20 | |

Washing Water

Prepared for both the tank solution and the replenisher by passing tap water through a mixed bed column packed with an H type strongly acidic cation exchange resin ("Amberlite IR-120B, produced by Rhom & Haas Co.) and an OH type anion exchange resin ("Amberlite IR-400", produced by the same company) to reduce calcium and magnesium ion concentrations each to 3 mg/ℓ or less, and then adding to the resulting water 20 mg/ℓ of sodium dichloroisocyanurate and 1.5 g/ℓ of sodium sulfate. The pH of the resulting solution was in the range of from 6.5 to 7.5.

The test carried out in the examples is explained hereinbelow.

In the examples, the following three kinds of originals A, B, and C were used for obtaining A4-sized images by exposure of the photographic materials. The image ratio as referred to here was a ratio of the image formed on the photographic material to the total area of the photographic material.

Original A (image ratio: 3.5%):

Original having sentences on the white

background.

Original B (image ratio: 25%):

Original having two photographs of cabinet size and several lines of letters on the white background.

Original C (image ratio: 60%):

Photograph original of A4 size.

First of all, a standard gray original was photographed under exposure conditions capable of reproducing the same gray. The exposed photographic material was subjected to the above-described processing. Next, the same standard gray original was again photographed under the same exposure conditions. After conducting replenishment according to the present invention, the exposed photographic material was subjected to the above-described processing. The densities of gray developed on the photographic material obtained before and after the replenishment were measured and compared.

The gray density was measured with blue light (B), green light (G) or red light (R). If the gray tone does not change through the replenishment of the developer, stable images can always be obtained. Accordingly, if the gray densities before and after the

replenishment were approximate to each other, it means that optimum replenishment had been conducted.

EXAMPLE 1

(Replenishment Based on Image Ratio of Original)

In this example, the replenisher was supplied in proportion to the image ratio.

Table 4 shows conditions of test of the photographic material A-1, and Table 5 shows the results obtained.

Calculation of the quantity of a replenisher based on the original image ratio was performed according to the above-described equation (2), wherein $a=24.9$ ml/A4; $S=1.0$; $\alpha=0.5$; $G=0.70$; $D=0.035$, 0.25, or 0.60; $C=1.0$; $A=1.0$; $x_0=0.25$ $\beta=1.0$; and $\gamma=0.89$.

Table 4

| Test | Original | Number of Copies | Quantity of Replenisher |
|---|---|---|---|
| 1 (Comparative Example) | A | 1100 | 18.8 ml/A4 |
| 2 (Comparative Example) | B | 1100 | " |
| 3 (Comparative Example) | C | 1100 | " |
| 4 (Example) | A | 1100 | 13.2 ml/A4 |
| 5 (Example) | B | 1100 | 18.8 ml/A4 |
| 6 (Example) | C | 1100 | 29.6 ml/A4 |

Table 5

| | Gray Density | | |
|---|---|---|---|
| | B | G | R |
| Before Test | 0.84 | 0.86 | 0.81 |
| After Test 1 | 0.96 | 0.90 | 0.89 |
| After Test 2 | 0.86 | 0.87 | 0.85 |
| After Test 3 | 0.60 | 0.75 | 0.75 |
| After Test 4 | 0.82 | 0.83 | 0.79 |
| After Test 5 | 0.84 | 0.85 | 0.82 |
| After Test 6 | 0.87 | 0.88 | 0.84 |

As is apparent from the test results shown in Table 5, the gray of copies taken of the standard gray original after the replenishment based on the image ratio according to the present invention had densities close to that of the copy taken before the replenishment, proving well-balanced.

EXAMPLE 2

(Replenishment Based on Image Ratio of Original)

When the above-described photographic material C-1 was used for copying, the same effects as obtained in using the photographic light-sensitive material A-1 were obtained. In the test of this example, negative originals A' (image ratio: 3.5%), B' (image ratio: 25%), and C' (image ratio: 60%) were used for image recording. The image ratio as referred to here was a calculated

value of the ratio of the image recorded on the photographic material C-1 as calculated by pre-scan control.

Conditions of the test of the photographic material C-1 are shown in Table 6, and the test results are shown in Table 7.

In carrying out the test, the lamp 38 of the copying machine was turned off, and a light source was placed above the original instead.

Calculation of the quantity of a replenisher based on the original image ratio was performed according to the above-described equation (2), wherein a=24.9 ml/A4; S=1.0; $\alpha$=0.5; G=0.70; D=0.035, 0.25, or 0.60; C=1.0; A=1.0; $x_0$=0.25; $\beta$=1.0; and $\gamma$ =0.89.

Table 6

| Test | Original | Number of Copies | Quantity of Replenisher |
|---|---|---|---|
| 1 (Comparative Example) | A' | 1100 | 16.9 ml/A4 |
| 2 (Comparative Example) | B' | 1100 | " |
| 3 (Comparative Example) | C' | 1100 | " |
| 4 (Example) | A' | 1100 | 16.7 ml/A4 |
| 5 (Example) | B' | 1100 | 14.4 ml/A4 |
| 6 (Example) | C' | 1100 | 22.7 ml/A4 |

Table 7

| | Gray Density | | |
|---|---|---|---|
| | B | G | R |
| Before Test | 0.84 | 0.86 | 0.81 |
| After Test 1 | 0.95 | 0.91 | 0.88 |
| After Test 2 | 0.86 | 0.87 | 0.83 |
| After Test 3 | 0.58 | 0.76 | 0.74 |
| After Test 4 | 0.83 | 0.84 | 0.82 |
| After Test 5 | 0.84 | 0.85 | 0.82 |
| After Test 6 | 0.87 | 0.87 | 0.83 |

As is apparent from the test results shown in Table 7, the gray of copies taken of the standard gray original after the replenishment based on the image ratio according to the present invention had densities close to that of the copy taken before the replenishment, proving well-balanced.

EXAMPLE 3

Three kinds of originals having an image ratio of 5%, 25%, and 80%, respectively, were reproduced on the direct positive color light-sensitive material prepared in Example 1 by the use of the above-described apparatus to obtain 250 copies of A4 size at an enlargement ratio of 100% (full size). The light-sensitive material was processed according to the following procedure. During the processing, replenishment of the

color developer was carried out on the basis of the original image ratio according to the present invention or, for comparison, on the basis of only the size of the light-sensitive material and the number of copies processed.

Test conditions are shown in Table 8.

Table 8

| | Number of Copies (Size: A4) Original Image Ratio 5% | 25% | 80% | Method of Replenishment of Color Developer |
|---|---|---|---|---|
| Test 1 (Comparison) | 220 | 20 | 10 | 18.1"/A4 (fixed quantity of replenisher) |
| Test 2 (Comparison) | 20 | 20 | 210 | 18.1"/A4 (fixed quantity of replenisher) |
| Test 3 (Invention) | 220 | 20 | 10 | replenishment based on original image ratio |
| Test 4 (Invention) | 20 | 20 | 210 | replenishment based on original image ratio |

Processing Step

| Processing Step | Time | Temp. | Volume of Tank Solution | Quantity of Replenisher |
|---|---|---|---|---|
| Color Development | 135" | 38°C | 15 ℓ | *) |
| Blix | 40" | 33°C | 3 ℓ | 300 ml/m$^2$ |
| Washing (1) | 40" | 33°C | 3 ℓ | --- |
| Washing (2) | 40" | 33°C | 3 ℓ | 320 ml/m$^2$ |
| Drying | 30" | 80°C | | |

Note: *) Comparative Example: 18.1"/A4

Invention: Replenishment based on original image ratio

The replenishment of washing water was effected by a so-called counter-current system in which the washing bath (2) was replenished, and the overflow from the washing bath (2) was lead to the washing bath (1). In this case, the amount of the blix solution which was carried over by the light-sensitive material from the blix bath to the washing bath (1) was 35 ml/$m^2$, the quantity of the washing water replenisher corresponded to 9.1 times the amount of the blix solution carried over.

The respective processing solution had the following composition.

Color Developer

| | Tank Solution | Replenisher |
|---|---|---|
| Ethylenediaminetetrakis-methylenephosphonic acid | 1.5 g | 1.5 g |
| Diethylene glycol | 10 ml | 10 ml |
| Benzyl alcohol | 12.0 ml | 14.4 ml |
| Potassium bromide | 1.60 g | 1.0 g |
| Sodium sulfite | 2.4 g | 2.9 g |
| N,N-Bis(carboxymethyl)hydrazine | 4.0 g | 4.8 g |
| Triethanolamine | 6.0 g | 7.2 g |

| | | |
|---|---|---|
| N-Ethyl-N-(β-methanesulfonamidoethyl)-3-methyl-4-aminoaniline sulfate | 6.0 g | 7.2 g |
| Potassium carbonate | 30.0 g | 25.0 g |
| Brightening agent (diaminostilbene type) | 1.0 g | 1.2 g |
| Water to make | 1000 ml | 1000 ml |
| pH (25°C) | 10.50 | 11.00 |

Blix Solution

| | Tank Solution | Replenisher |
|---|---|---|
| Disodium ethylenediaminetetraacetate dihydrate | 4.0 g | the same as the tank solution |
| Ammonium ethylenediaminetetraacetato iron(III) dihydrate | 70.0 g | do |
| Ammonium thiosulfate (700 g/ℓ) | 180 ml | do |
| Sodium p-toluenesulfonate | 20.0 ml | do |
| Sodium bisulfite | 20.0 g | do |
| 2-Amino-5-mercapto-1,3,4-thiadiazole | 0.6 g | do |
| Ammonium nitrate | 10.0 g | do |
| Water to make | 1000 ml | |
| pH (25°C) | 6.20 | |

Washing Water

Prepared for both the tank solution and the replenisher by passing tap water through a mixed bed column packed with an H type strongly acidic cation

exchange resin ("Amberlite IR-120B, produced by Rhom & Haas Co.) and an OH type anion exchange resin ("Amberlite IR-400", produced by the same maker) to reduce calcium and magnesium ion concentrations each to 3 mg/ℓ or less, and adding to the thus treated water 20 mg/ℓ of sodium dichloroisocyanurate and 1.5 g/ℓ of sodium sulfate. The resulting solution had a pH of from 6.5 to 7.5.

Results of Processing

The maximum image density (Dmax) and minimum image density (Dmin) each before and after taking 250 copies are shown in Table 9.

Table 9

| | Yellow | | Magenta | | Cyan | |
|---|---|---|---|---|---|---|
| | Dmax | Dmin | Dmax | Dmin | Dmax | Dmin |
| Before taking 250 copies | 2.41 | 0.12 | 2.35 | 0.11 | 2.30 | 0.12 |
| After taking 250 copies | | | | | | |
| Test 1 | 2.67 | 0.25 | 2.48 | 0.25 | 2.50 | 0.26 |
| 2 | 1.57 | 0.12 | 1.45 | 0.11 | 1.87 | 0.12 |
| 3 | 2.47 | 0.13 | 2.22 | 0.12 | 2.32 | 0.13 |
| 4 | 2.39 | 0.12 | 2.31 | 0.11 | 2.29 | 0.12 |

In the case when a given amount of the replenisher per area of the light-sensitive material was supplied according to the conventional replenishment method, the maximum image density of the resulting

direct positive image becomes low if a large number of copies are obtained from an original having a large image ratio as in Test 2, or the minimum image density of the direct positive image becomes high if a large number of copies are obtained from an original having a small image ratio as in Test 2. To the contrary, according to the method of the present invention, not only Dmax and Dmin but the intermediate density can always be maintained constant, thus providing images having a constant finish with reduced variation.

EXAMPLE 4

[Preparation of Light-Sensitive Material]

B/W core/shell emulsions (a), (b), and (c) were prepared according to the following process.

Emulsion (a):

A potassium bromide aqueous solution and a silver nitrate aqueous solution were simultaneously added to a gelatin aqueous solution under vigorous stirring over a period of about 20 minutes at 40°C while controlling the pAg at 7.90 to thereby obtain a monodisperse cubic silver bromide emulsion having a mean grain size of 0.08 μm. To the emulsion were added 580 mg each of sodium thiosulfate and chloroauric acid (tetrahydrate) per mole of silver, followed by heating at 75°C for 80 minutes to effect chemical sensitization.

The resulting silver bromide grain emulsion was used as a core and allowed to grow under the same precipitation environment as used above to finally obtain a core/shell type monodisperse cubic silver bromide emulsion having a mean grain size of 0.18 µm. After washing with water and desalting, 6.2 mg each of sodium thiosulfate and chloroauric acid (tetrahydrate) per mole of silver were added to the emulsion, followed by heating at 65°C for 60 minutes to effect chemical sensitization to obtain an emulsion.

Emulsion (b):

A potassium bromide aqueous solution and a silver nitrate aqueous solution were added simultaneously to a gelatin aqueous solution under vigorous stirring at 45°C over a period of about 40 minutes while controlling the pAg at 9.70 to obtain an octahedral silver bromide emulsion having a mean grain size of 0.2 µm. To the emulsion were added 5 mg each of sodium thiosulfate and chloroauric acid (tetrahydrate) per mol of silver, followed by heating at 75°C for 80 minutes to effect chemical sensitization. The resulting silver bromide grains were allowed to further grow as a core under the same precipitation environment as used above for 40 minutes to finally obtain a monodisperse emulsion of octahedral core/shell silver bromide grains having a

mean grain size of 0.35 μm. To the emulsion were added sodium thiosulfate and chloroauric acid (tetrahydrate) each in an amount of 4.5 mg per mol of silver, followed by heating at 65°C for 60 minutes to effect chemical sensitization to obtain an internal latent image type silver halide emulsion (b).

Emulsion (c):

A potassium bromide aqueous solution and a silver nitrate aqueous solution were added simultaneously to a gelatin aqueous solution under vigorous stirring at 75°C over a period of about 40 minutes while controlling the pAg at 8.60 to obtain a monodisperse emulsion of octahedral silver bromide grains having a mean grain size of 0.4 μm. To the emulsion were added sodium thiosulfate and chloroauric acid (tetrahydrate) each in an amount of 4 mg per mol of silver, followed by heating at 75°C for 80 minutes to effect chemical sensitization. The resulting silver bromide grains were allowed to further grow as a core under the same environment as used above for 40 minutes to finally obtain a monodisperse emulsion of octahedral core/shell silver bromide grains having a mean grain size of 0.6 μm. After washing with water and desalting, 0.9 mg of sodium thiosulfate per mol of silver was added to the emulsion, followed by heating at 65°C for 60 minutes to

effect chemical sensitization to obtain an internal latent image type silver halide emulsion (c).

On a 100 μm thick polyethylene terephthalate support having a subbing layer were coated an antihalation layer comprising 65 $mg/m^2$, 80 $mg/m^2$, and 40 $mg/m^2$ of antihalation dyes A, B, and C, respectively, 10 $mg/m^2$ of 5-methylbenzotriazole, and 5 $g/m^2$ of gelatin and a protective layer (upper layer) comprising barium strontium sulfate having a mean particle size of 1.0 μm and polymethyl methacrylate having a mean particle size of 1.3 μm as matting agents, 30 $mg/m^2$ of a coating aid D, 1 $mg/m^2$ of a charge control agent E, 100 $mg/m^2$ of a hardening agent F, and 1g/$m^2$ of gelatin, to form a double-layered backing layer.

Dye A:

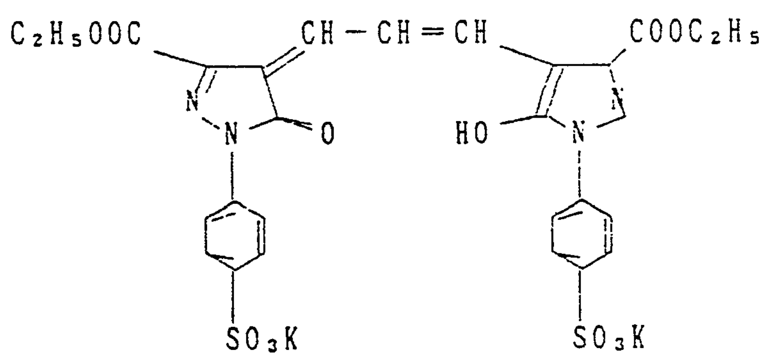

Dye B:

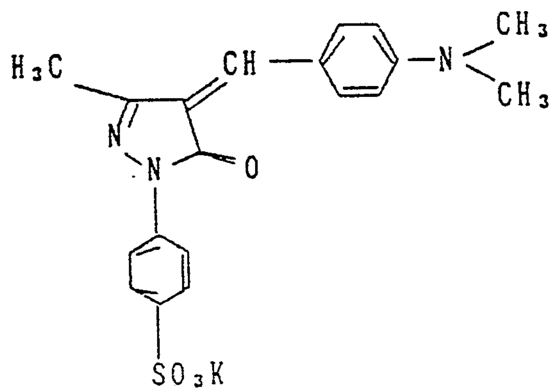

Dye C:

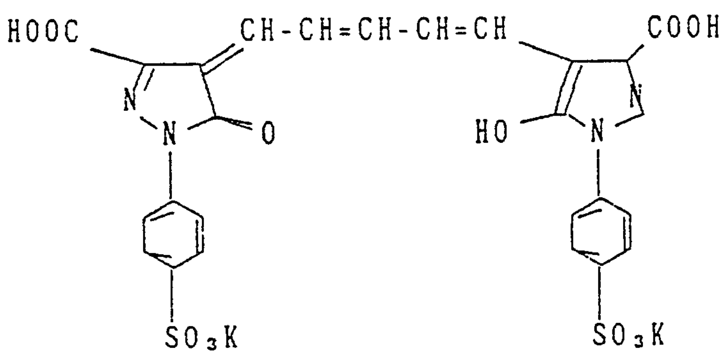

Coating Aid D:

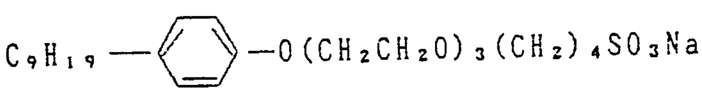

Charge Control Agent E:

$C_8F_{17}SO_3NCH_2COOK$ (with $C_3H_7$ on N)

Megafac F-120

(produced by Dai-Nippon Ink & Chemicals, Inc.)

Hardening Agent F:

$CH_2=CHSO_2CH_2CHCH_2SO_2CH=CH_2$ (with OH on the central CH)

To each of the core/shell emulsion (a), (b), and (c) was added 150 mg, 200 mg, or 180 mg of a sensitizing dye G per mol of silver, respectively, and was further added 110 mg, 83 mg, or 150 mg of a fogging agent H per mol of silver, respectively. Furthermore, for making a balance between surface tension and viscosity, sodium dodecylbenzenesulfonate as a coating aid and a viscosity-increasing agent were added to the emulsion to prepare a coating composition for the 1st, 2nd, or 3rd layer, respectively.

Sensitizing Dye G:

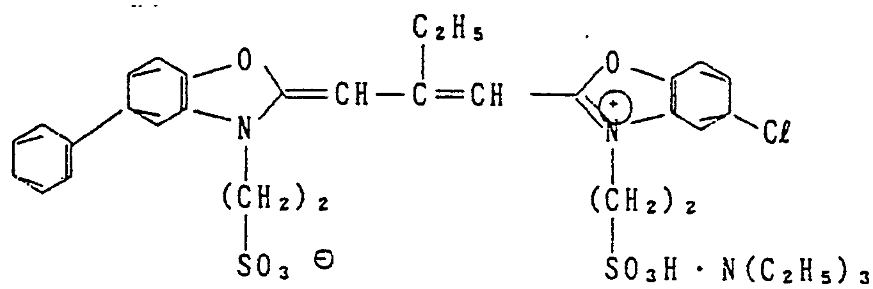

Fogging Agent H:

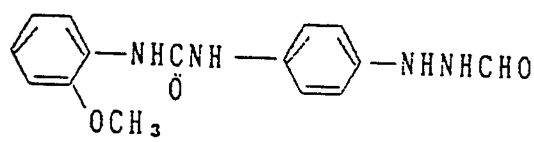

The charge control agent E, sodium dodecylbenzenesulfonate as a coating aid, and the viscosity-increasing agent were added to gelatin to prepare a coating composition for the 4th layer, a protective layer. The emulsion layers were successively coated in multilayers on the support on the side opposite to the aforesaid backing layer in the order of from the 1st to 4th layers to a silver coverage of 1 $g/m^2$ in the 1st layer, 0.8 $g/m^2$ in the 2nd layer, and 1.5 $g/m^2$ in the 3rd

layer with a gelatin coverage of 1.3 $g/m^2$ in the 1st layer, 1.3 $g/m^2$ in the 2nd layer, 2.4 $g/m^2$ in the 3rd layer, and 1.7 $g/m^2$ in the 4th layer, to thereby prepare a direct positive photographic light-sensitive material.

The thus prepared direct positive light-sensitive material was used for taking 250 copies of A4 size from each of three kinds of originals having an image ratio of 5%, 25%, and 80% at an enlargement ratio of 100% (full size) in the same manner as in Example 3 by the use of the same machine as used in Example 1. The light-sensitive material was processed according to the following procedure. During the processing, replenishment of the developer was carried out according to the method based on the original image ratio or, for comparison, based on only the size of the light-sensitive material and the number of copies processed.

The test conditions are shown in Table 10.

Table 10

| | Number of Copies (Size: A4) Original Image Ratio 5% | 25% | 80% | Method of Replenishment of Color Developer |
|---|---|---|---|---|
| Test 1 (Comparison) | 220 | 20 | 10 | 26"/A4 (fixed quantity of replenisher) |
| Test 2 (Comparison) | 20 | 20 | 210 | 26"/A4 (fixed quantity of replenisher) |
| Test 3 (Invention) | 220 | 20 | 10 | replenishment based on original image ratio |
| Test 4 (Invention) | 20 | 20 | 210 | replenishment based on original image ratio |

The processing steps were as follows.

Processing Step

| Processing Step | Time | Temp. | Volume of Tank Solution | Quantity of Replenisher |
|---|---|---|---|---|
| Color Development | 90" | 34°C | 15 ℓ | *) |
| Fix | 40" | 33°C | 3 ℓ | 300 cc/$m^2$ |
| Washing (1) | 40" | 33°C | 3 ℓ | 300 cc/$m^2$ |
| Washing (2) | 40" | 33°C | 3 ℓ | 300 cc/$m^2$ |
| Drying | 30" | 80°C | | |

Note: *) Comparative Example: 26 cc/A4

Invention: Replenishment based on original image ratio. The original image ratio was measured with visible light.

Each of the processing solutions had the following composition.

Developer:

Replenisher A

| | |
|---|---|
| Sodium sulfite | 100 g |
| Potassium carbonate | 20 g |
| Potassium bromide | 30 g |
| 1-Phenyl-4-methyl-4-hydroxymethyl-3-pyrazolidone | 3 g |
| Hydroquinone | 45 g |
| 5-Methylbenzotriazole | 40 mg |
| Water to make | 1 ℓ |
| pH adjusted to (with potassium hydroxide) | 11.8 |

Starter B

| | |
|---|---|
| Sodium bromide | 175 g |
| Glacial acetic acid | 63 ml |
| Water to make | 1 ℓ |

The tank solution was prepared by admixing the replenisher A with 20 cc of the starter per liter of the replenisher.

Fixing Solution:

Super Fuji Fix

Washing Water:

The same as used in Example 3.

Results of Processing

The maximum density (Dmax) and the minimum density (Dmin) before and after taking 250 copies are shown in Table 11.

Table 11

| | Dmax | Dmin |
|---|---|---|
| Before taking 250 copies | 2.95 | 0.12 |
| After taking 250 copies | | |
| Test 1 | 3.04 | 0.17 |
| 2 | 2.62 | 0.13 |
| 3 | 2.90 | 0.13 |
| 4 | 2.89 | 0.13 |

Similarly to Example 1, according to the present invention, the variations in Dmax and Dmin can always be reduced, and the intermediate temperature can also be maintained constant, thus providing images of constant finish with reduced variation.

EXAMPLE 5

The same procedure as in Example 1 was repeated, except that the nucleating agent ExZK-1 was not used in the light-sensitive material and that the processing procedure was changed to the following processing step B.

The apparatus used was approximately the same as used in Example 1, except that a fog exposure device 211

was additionally provided for fog exposure in the color developer as shown in Figure 13.

Processing B:

| | Time | Temp. | Quantity of Replenisher |
|---|---|---|---|
| Color Development*1) | 135" | 36°C | *) |
| Blix | 40" | 36°C | 320 ml/$m^2$ |
| Stabilization (1) | 40" | 36°C | |
| Stabilization (2) | 40" | 36°C | 320 ml/$m^2$ |
| Drying | 40" | 70°C | |

Note: *) Comparative Example: 20 cc/A4

Invention: Replenishment based on original image ratio

*1) After immersed in the color developer for 15 seconds, the light-sensitive material was development-processed while fogging with white light of 1 lux for 15 seconds.

Color Developer

| | Tank Solution | Replenisher |
|---|---|---|
| Hydroxyethyliminodiacetic acid | 0.5 g | 0.5 g |
| β-Cyclodextrin | 1.5 g | 1.5 g |
| Monoethylene glycol | 9.0 g | 10.0 g |
| Benzyl alcohol | 9.0 g | 10.0 g |
| Monoethanolamine | 2.5 g | 2.5 g |
| Sodium bromide | 2.3 g | 1.5 g |

| | | |
|---|---|---|
| Sodium chloride | 5.5 g | 4.0 g |
| N,N-Diethylhydroxylamine | 5.9 g | 6.5 g |
| 3-Methyl-4-amino-N-ethyl-N-(β-methanesulfonamidoethyl)-aniline sulfate | 2.7 g | 3.0 g |
| 3-Methyl-4-amino-N-ethyl-N-(β-hydroxyethyl)aniline sulfate | 4.5 g | 5.0 g |
| Potassium carbonate | 30.0 g | 35.0 g |
| Brightening agent (stilbene type) | 1.0 g | 1.2 g |
| Pure water to make | 1000 ml | 1000 ml |
| pH | 10.30 | 10.70 |

The pH was adjusted with potassium hydroxide or hydrochloric acid.

Blix Solution

| | Tank Solution=Replenisher |
|---|---|
| Ammonium thiosulfate | 110 g |
| Sodium hydrogensulfite | 12 g |
| Ammonium diethylenetriamine-pentaacetato iron(III) | 80 g |
| Diethylenetriaminepentaacetic acid | 5 g |
| 2-Mercapto-5-amino-1,3,4-thiadiazole | 0.3 g |
| Pure water to make | 1000 ml |
| pH | 6.80 |

The pH was adjusted with aqueous ammonia or hydrochloric acid.

250 copies were obtained from each of the same three kinds of originals as used in Example 3 according to the method of this invention or the comparative method.

Similarly to the results of Example 3, images of constant quality could always be obtained when the replenishment was conducted on the basis of the image ratio of the original according to the present invention.

EXAMPLE 6

Table 12 shows conditions of the test in which an original of A3 size was reduced to an A4 size, i.e., at a reduction ratio of 70%, by copying on the photographic light-sensitive material A-1, and the results of the test are shown in Table 13. In this case, since the reduced image of A4 size is recorded on the photographic light-sensitive material of 298 mm × 298 mm, the required quantity of the replenisher should be more than that in the case of an A4 size (18.8 ml).

Calculation of the quantity of the replenisher on the basis of variable magnification was performed according to the above-described equation (2), wherein a=24.9 ml/A4; S=1.0; $\alpha$=0.5; G=0.70; D=0.25; C=1.0; A=0.70; $x_0$=0.25; $\beta$=1.0; and $\gamma$=0.89.

Table 12

| Test | Original | Number of Copies | Quantity of Replenisher |
|---|---|---|---|
| 1 (Comparative Example) | B | 1100 | 20.4 ml/A4 |
| 2 (Example) | B | 1100 | 21.5 ml/A4 |

Table 13

| | Gray Density | | |
|---|---|---|---|
| | B | G | R |
| Before Test | 0.84 | 0.86 | 0.81 |
| After Test 1 | 0.63 | 0.77 | 0.76 |
| After Test 2 | 0.86 | 0.86 | 0.83 |

As is apparent from the test results shown in Table 13, the densities of the copies taken from the standard gray original after conducting the replenishment based on the variable magnification according to the present invention were close to the density of the copy taken from the standard gray original before the replenishment, proving well-balanced.

EXAMPLE 7

(Replenishment Based on Large Volume Processing Condition)

When a large volume of the photographic light-sensitive material A-1 was processed in a short time, and the replenisher was supplied in the quantity in

proportion to the number of copies, it was turned out difficult to obtain a sufficient density of magenta.

It was therefore necessary to reduce the quantity of a replenisher of developer for large volume processing.

Incidentally, since large volume processing was conducted in Examples 1 to 3 hereinabove described, the quantities of replenishers employed in these examples were decided taking the large volume processing into consideration.

Table 14 shows the conditions of the test of the photographic light-sensitive material A-1 in large volume processing, and Table 15 shows the test results.

Calculation of the quantity of the replenisher based on the large volume processing condition was performed according to the above-described equation (2), wherein $a=24.9$ ml/A4, $S=1.0$; $\alpha=0.5$; $G=0.70$; $D=0.25$; $C=1.0$; $A=1.0$; $x_0=0.25$; $\beta=1.0$; and $\gamma=0.89$.

Table 14

| Test | Number of Copies | Quantity of Replenisher |
|---|---|---|
| 1 (Comparative Example) | 1100, in a continuous manner | 21.1 ml/A4 |
| 2 (Example) | 1100, in a continuous manner | 21.1×0.89 ml/A4 |
| 3 (Example) | 10/hour, 90/day for 12 days | 21.1 ml/A4 |

Table 15

| | Gray Density | | |
|---|---|---|---|
| | B | G | R |
| Before Test | 0.84 | 0.86 | 0.81 |
| After Test 1 | 0.83 | 0.69 | 0.78 |
| After Test 2 | 0.83 | 0.85 | 0.80 |
| After Test 3 | 0.82 | 0.86 | 0.79 |

As is apparent from the test results of Table 15, the densities of the copies taken from the standard gray original after conducting the replenishment based on the large volume processing condition according to the present invention are close to the density of the copy taken from the standard gray original before the replenishment, proving that the former gray to be well-balanced. In other words, in large volume processing, the increase of the preservative in the developer can be inhibited by reducing the quantity of a replenisher per

A4 like Test 2, thus preventing variation of gray balance.

## EXAMPLE 7

### (Evaporation Replenishment)

In this example, 100 ml of the developer was supplied each time processing had not been performed for 6 hours since the automatic developing machine was turned on.

The test conditions of evaporation replenishment in using the photographic light-sensitive material A-1 are shown in Table 16, and the test results are shown in Table 17.

Table 16

| Test | Quantity of Replenisher for Evaporation Loss |
|---|---|
| 1 (Comparison) | No replenishment was made even after off-hour of 6 hours. |
| 2 (Example) | 100 ml was supplied every time processing was not conducted for 6 hours |

Table 17

| | Gray Density | | |
|---|---|---|---|
| | B | G | R |
| Before Test | 0.84 | 0.86 | 0.81 |
| After Test 1 | 0.77 | 0.76 | 0.81 |
| After Test 2 | 0.83 | 0.84 | 0.81 |

As is apparent from the test results of Table 17, the densities of copies taken from the standard gray original after conducting the replenishment based on the evaporation quantity of developer are close to the density of the copy taken from the standard gray original before the replenishment, proving that the former gray to be well-balanced. In other words, when processing was not conducted for a long time after turning on the power source of the color copying machine, the bromide ion concentration in the developer could be maintained at a proper level by supplying the developer replenisher taking into the evaporation loss of the developer during the off-hour into consideration, whereby the gray balance is hardly liable to variation.

EXAMPLE 8 (Non-Operation Replenishment)

In this example, 300 ml of a developer was supplied after a color copying machine was allowed to stand for 2 weeks with the power off.

Conditions of the test of the non-operation replenishment in using the photographic light-sensitive material A-1 are shown in Table 18, and the test results are shown in Table 19.

Table 18

| Test | Quantity of Replenisher during Non-Operation |
| --- | --- |
| 1 (Comparison) | No replenishment was conducted after 2 weeks' standing. |
| 2 (Example) | 300 ml was supplied after 2 weeks' standing. |

Table 19

| | Gray Density | | |
| --- | --- | --- | --- |
| | B | G | R |
| Before Test | 0.84 | 0.86 | 0.81 |
| After Test 1 | 0.70 | 0.85 | 0.83 |
| After Test 2 | 0.83 | 0.87 | 0.80 |

As is apparent from the test results shown in Table 19, the densities of the copies taken from the standard gray original after the replenishment which was conducted taking the non-operation time into consideration were close to the density of the copy taken from the standard gray original before the replenishment, thus proving the former gray to be well-balanced. That is, when no processing was performed for a long time with the power off, the concentration of the preservative in the developer could be maintained at a proper level by supplying a developer replenisher taking the reduction of the concentration of the preservative

during the off-hour into consideration, whereby the gray balance was hardly liable to variation.

## INDUSTRIAL APPLICATION

According to the present invention, in which the quantity of a replenisher of a processing solution is decided taking factors giving influences to the quantity of a replenisher into consideration, the optimum processing conditions can be maintained to assure a uniform finish after processing.

In the present invention, over-replenishment or under-replenishment is not involved even when a large volume of a photographic light-sensitive material is processed or on the like occasions. Therefore the finish of the photographic light-sensitive material is not influenced in the present invention. Further, it is not necessary for an operator to confirm the finish of the photographic light-sensitive material with his eyes at regular intervals and manually correct the quantity of a replenisher based on his experience as is in the conventional systems.

WHAT IS CLAIMED IS

(1) A method for supplying a replenisher of a processing solution for processing a photographic light-sensitive material, which is characterized in that the quantity of a replenisher is decided based on an image ratio at the time when the photographic light-sensitive material is exposed to light, said image ratio being obtained previously either at the time of or before exposure.

(2) A method for supplying a replenisher of a processing solution for processing a photographic light-sensitive material, which is characterized in that the quantity of a replenisher is decided based on a variable magnification at the time when the photographic light-sensitive material is exposed to light.

(3) A method for supplying a replenisher of a processing solution for processing a photographic light-sensitive material, which is characterized in that the quantity of a replenisher is decided based on a large volume processing condition which is set in proportion to the number of sheets of the photographic light-sensitive material to be processed.

(4) A method for supplying a replenisher of a processing solution for processing a photographic light-sensitive material, which is characterized in that the

quantity of a replenisher is decided based on a non-operating time of an apparatus for processing the photographic light-sensitive material.

(5) A method for supplying a replenisher of a processing solution for processing a photographic light-sensitive material, which is characterized in that the quantity of a replenisher is decided based on a non-processing time during an operating time of an apparatus for processing the photographic light-sensitive material.

(6) An apparatus for supplying a replenisher of a processing solution for processing a photographic light-sensitive material, which comprises a means for obtaining an exposed image ratio of a photographic light-sensitive material and a control means which decides the quantity of a replenisher based on the image ratio.

Figure 1

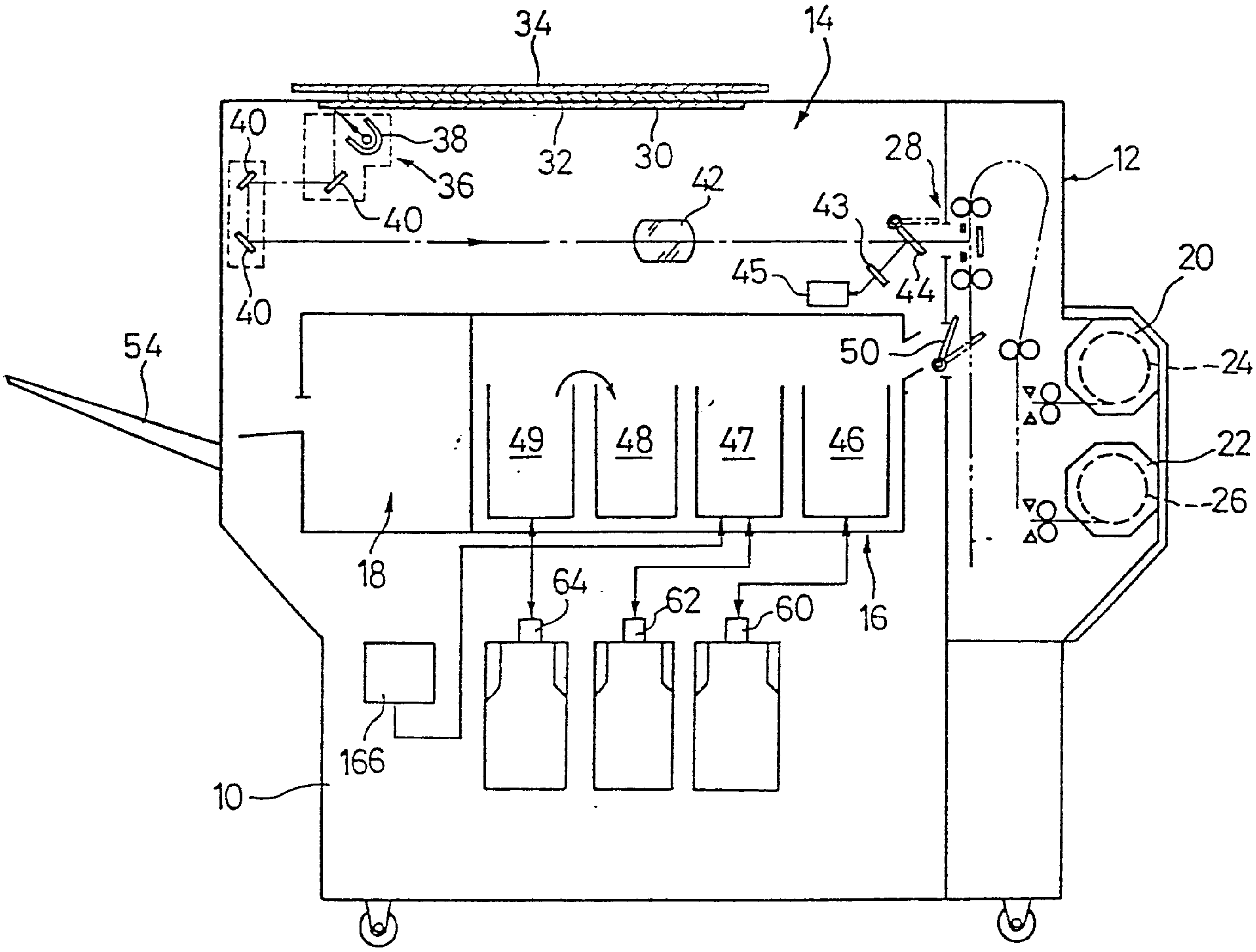
34
14
40
38
36
32
30
28
12
40
42
43
45
44
20
40
54
50
24
49
48
47
46
22
26
18
16
64
62
60
166
10

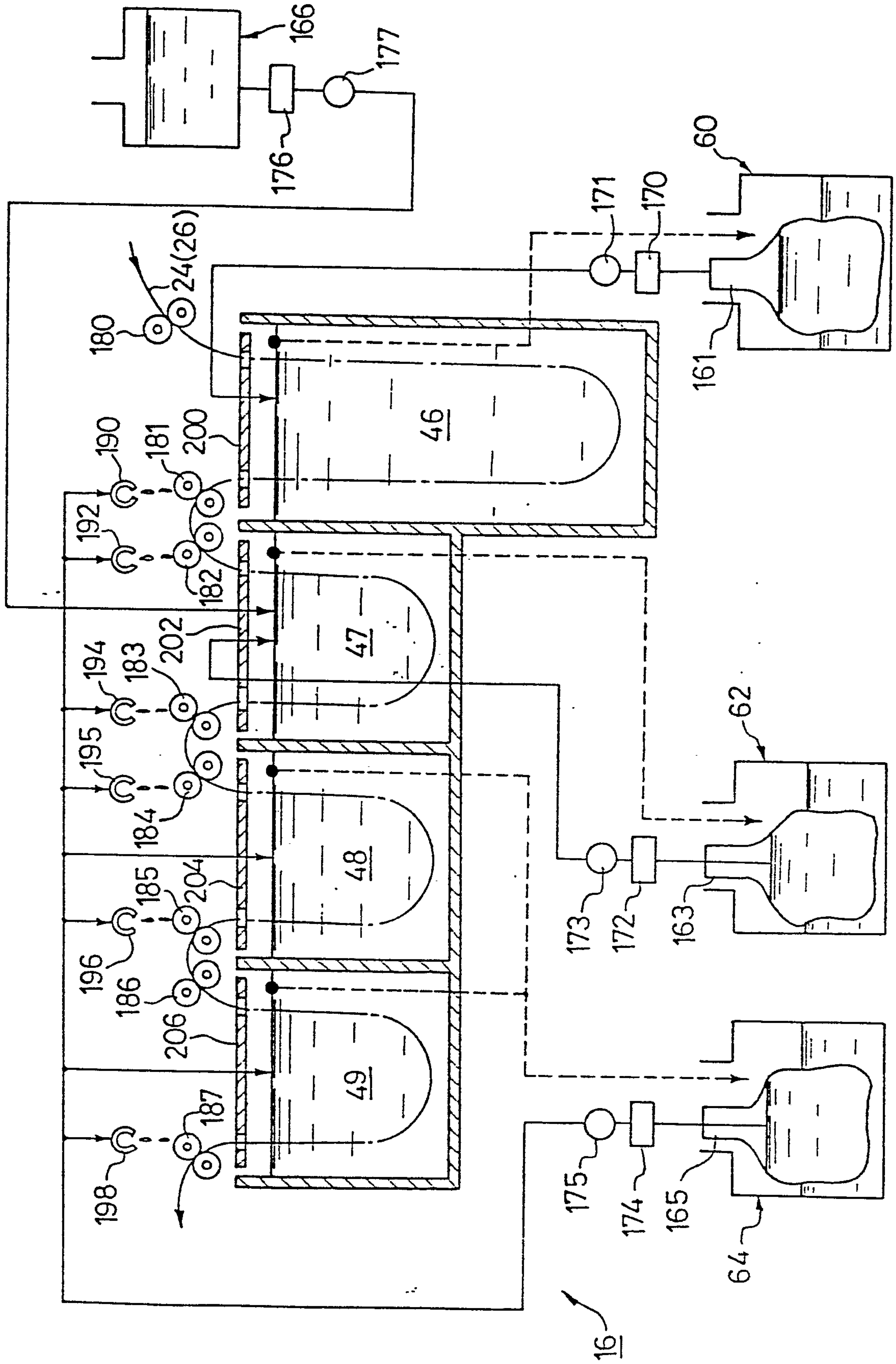
166
177
176
60
171
170
24(26)
180
161
46
190
181
200
192
182
47
202
194
183
62
195
184
48
185
204
173
172
163
196
186
206
49
187
198
175
174
165
64
16

Figure 2

Figure 3

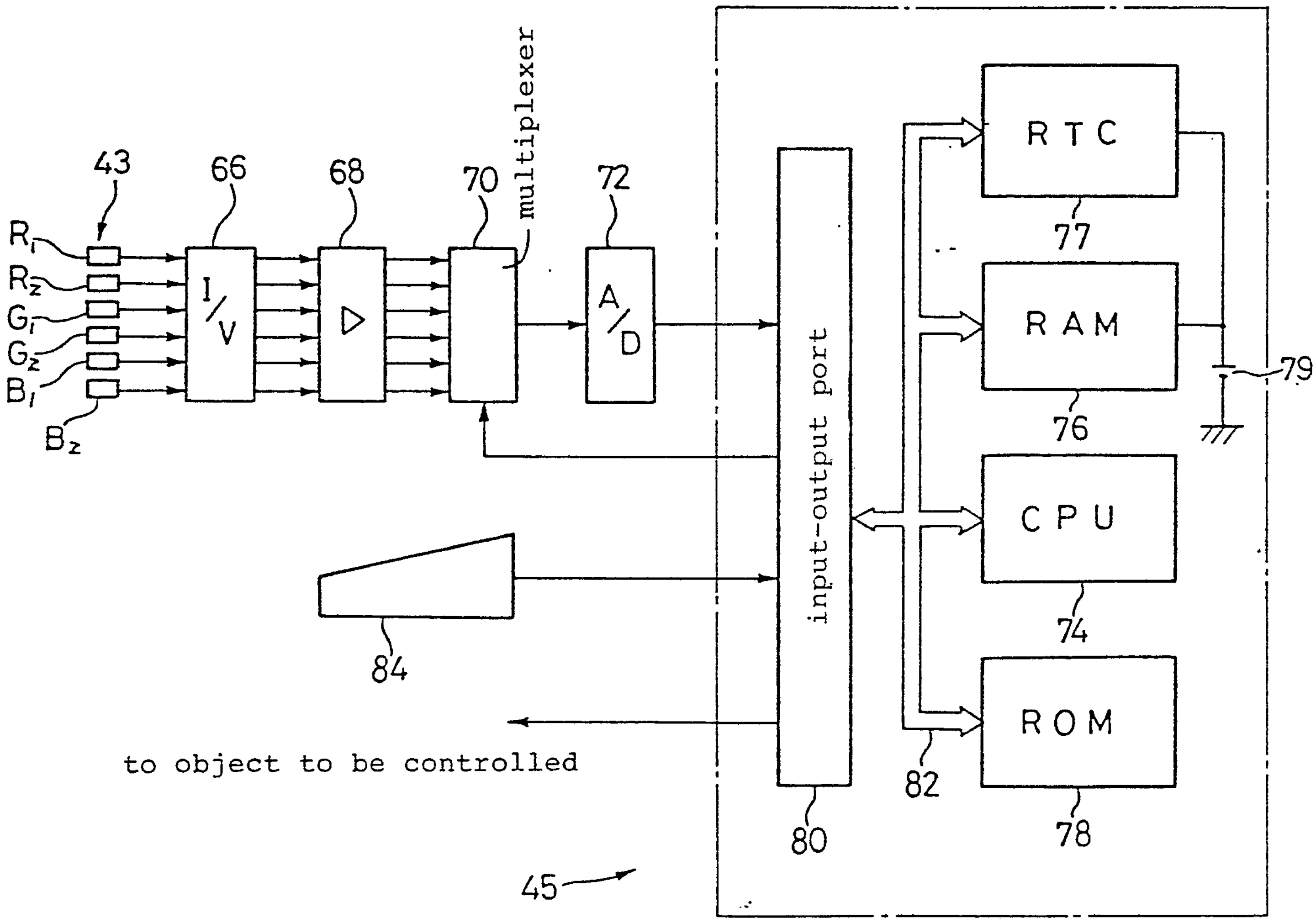
43
66
68
70
multiplexer
72
R1
R2
G1
G2
B1
B2
I/V
A/D
input-output port
RTC
RAM
CPU
ROM
77
76
74
78
79
80
82
84
to object to be controlled
45

Figure 4

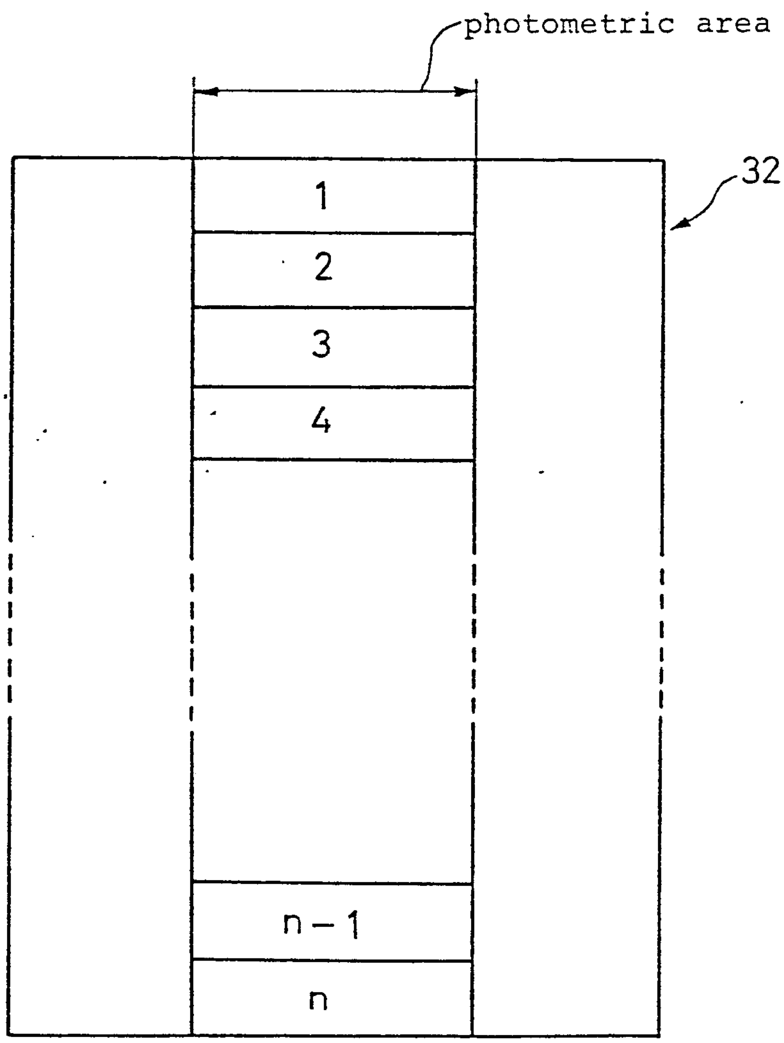

Figure 5

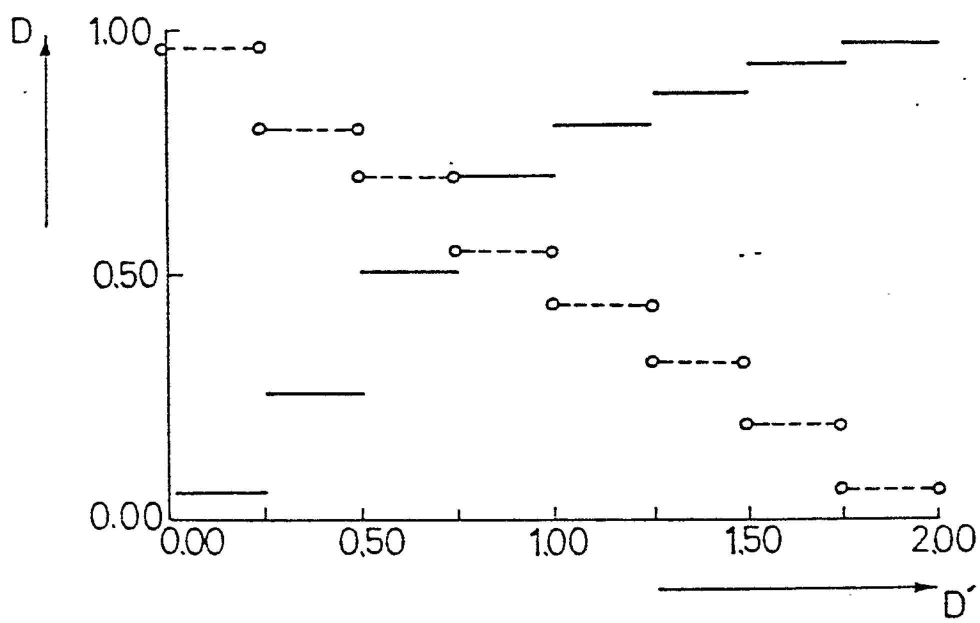

Figure 6

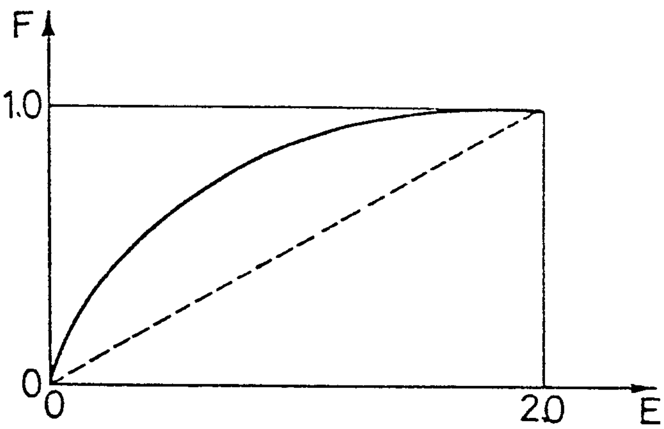


Figure 7

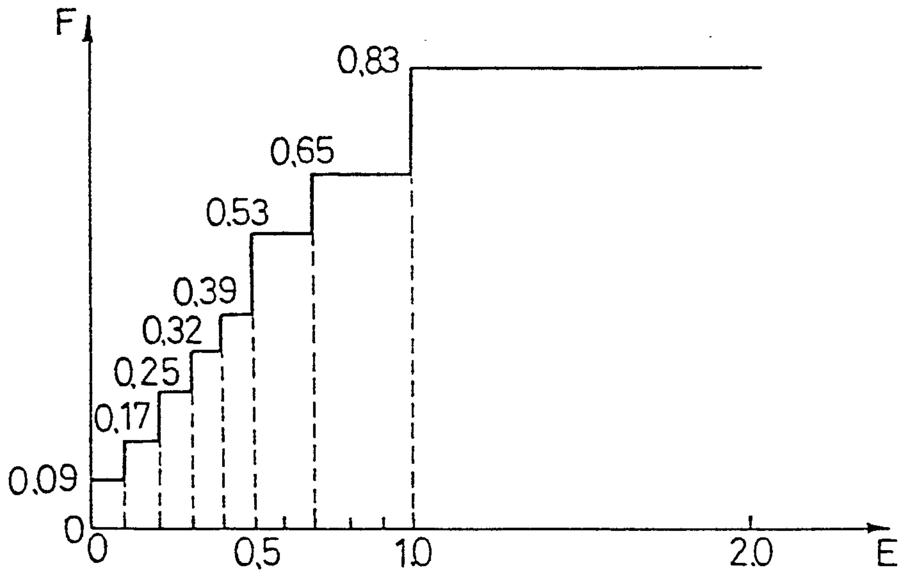

Figure 8

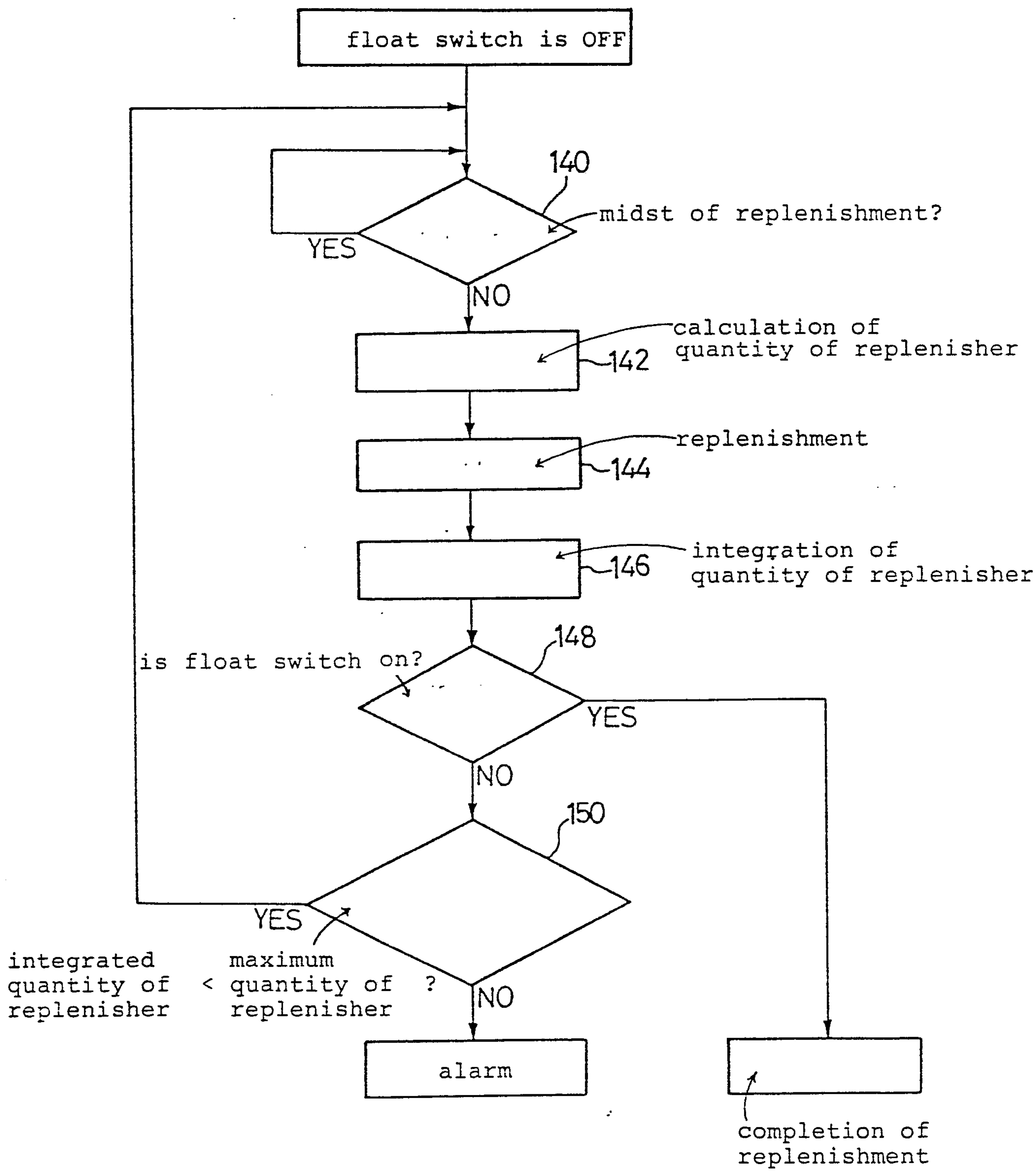
float switch is OFF
140
midst of replenishment?
YES
NO
calculation of
quantity of replenisher
142
replenishment
144
integration of
quantity of replenisher
146
148
is float switch on?
YES
NO
150
YES
integrated
quantity of
replenisher
<
maximum
quantity of
replenisher
?
NO
alarm
completion of
replenishment

Figure 9

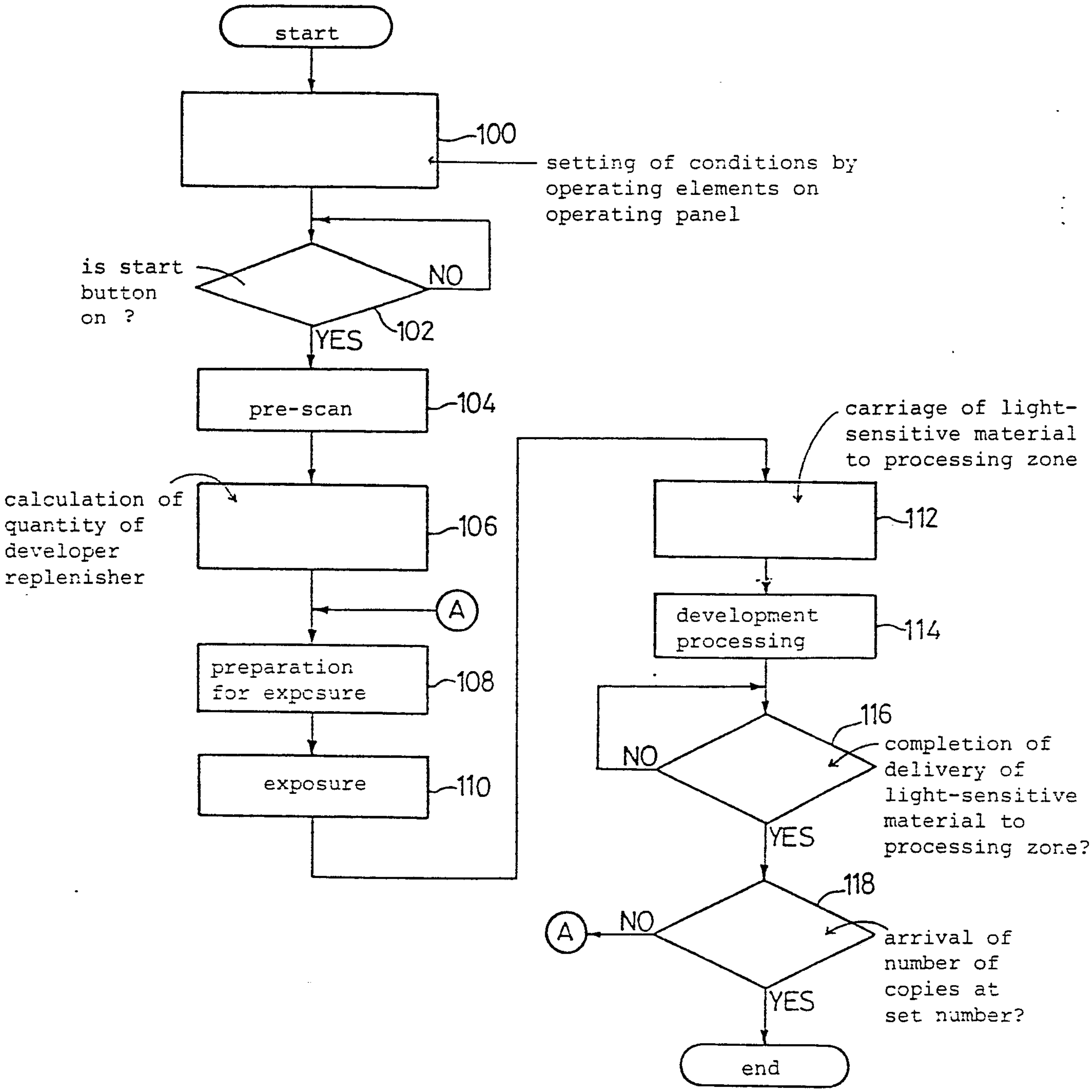
start
100
setting of conditions by operating elements on operating panel
is start button on ?
NO
YES
102
pre-scan
104
calculation of quantity of developer replenisher
106
A
preparation for exposure
108
exposure
110
carriage of light-sensitive material to processing zone
112
development processing
114
116
completion of delivery of light-sensitive material to processing zone?
NO
YES
118
arrival of number of copies at set number?
A
NO
YES
end

Figure 10

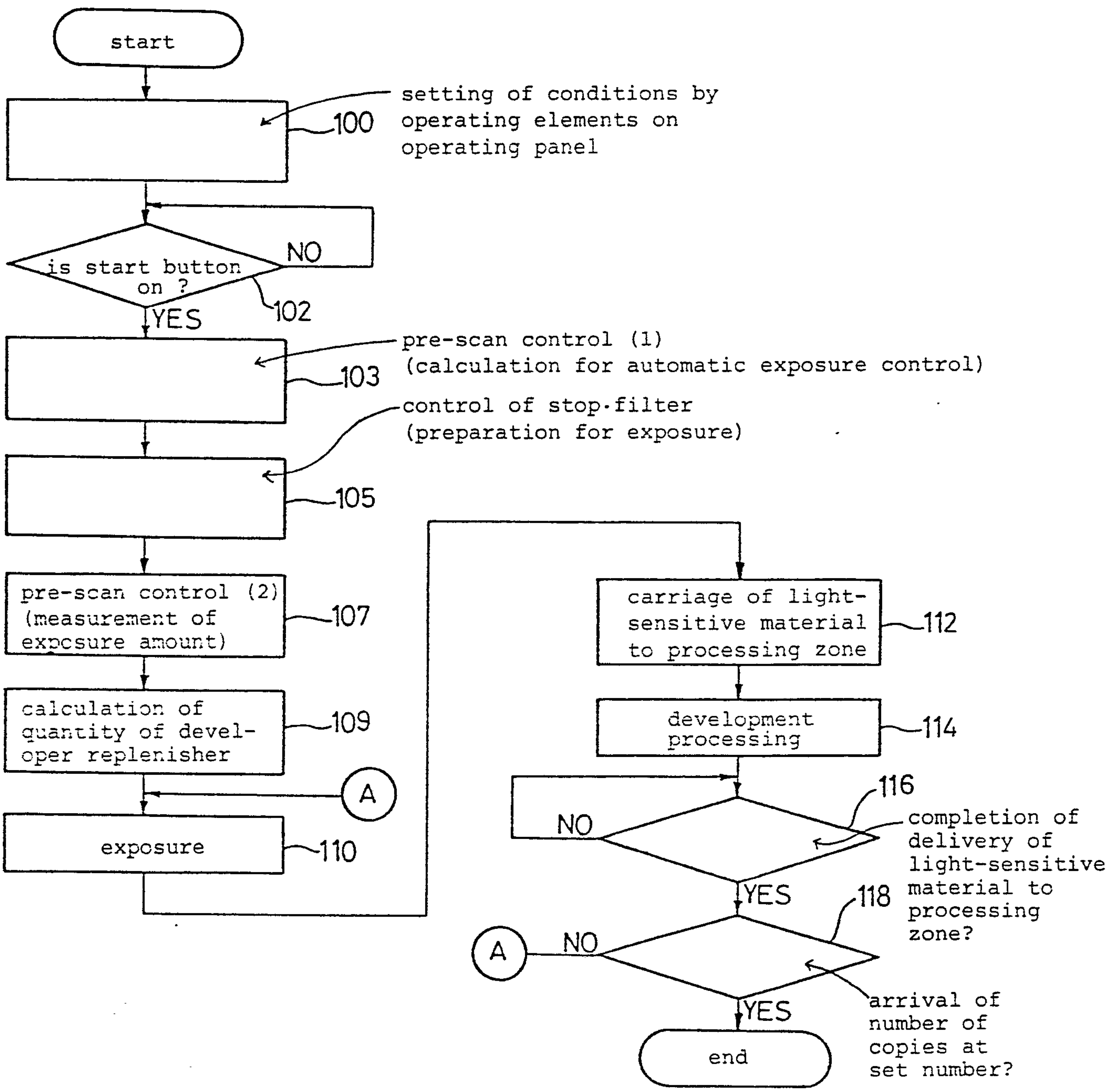
start
setting of conditions by operating elements on operating panel
100
is start button on ?
NO
102
YES
pre-scan control (1) (calculation for automatic exposure control)
103
control of stop·filter (preparation for exposure)
105
pre-scan control (2) (measurement of exposure amount)
107
calculation of quantity of developer replenisher
109
A
exposure
110
carriage of light-sensitive material to processing zone
112
development processing
114
116
NO
completion of delivery of light-sensitive material to processing zone?
YES
118
A
NO
arrival of number of copies at set number?
YES
end

Figure 11

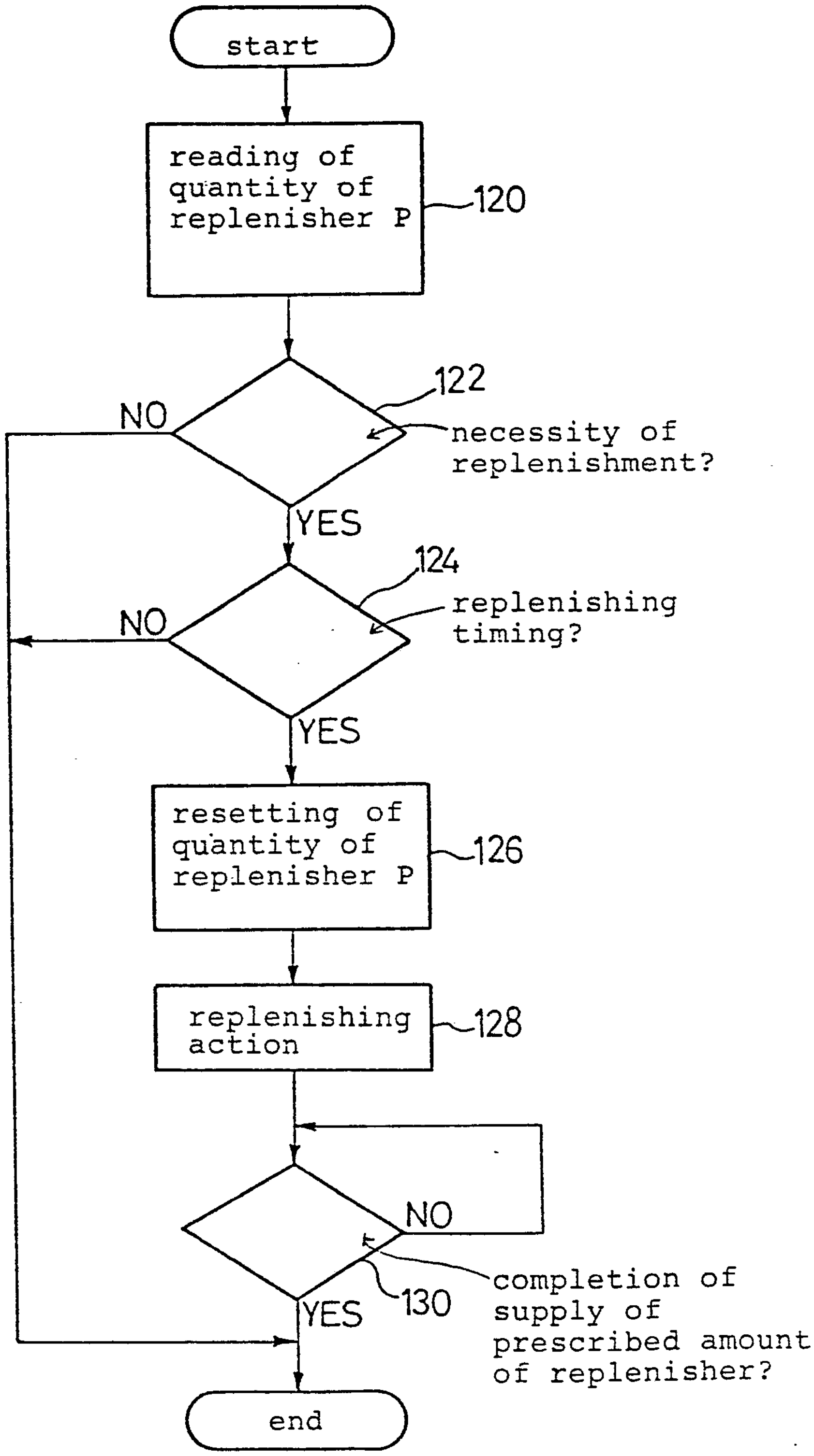
start
reading of quantity of replenisher P
120
122
NO
necessity of replenishment?
YES
124
NO
replenishing timing?
YES
resetting of quantity of replenisher P
126
replenishing action
128
NO
completion of supply of prescribed amount of replenisher?
130
YES
end

Figure 12

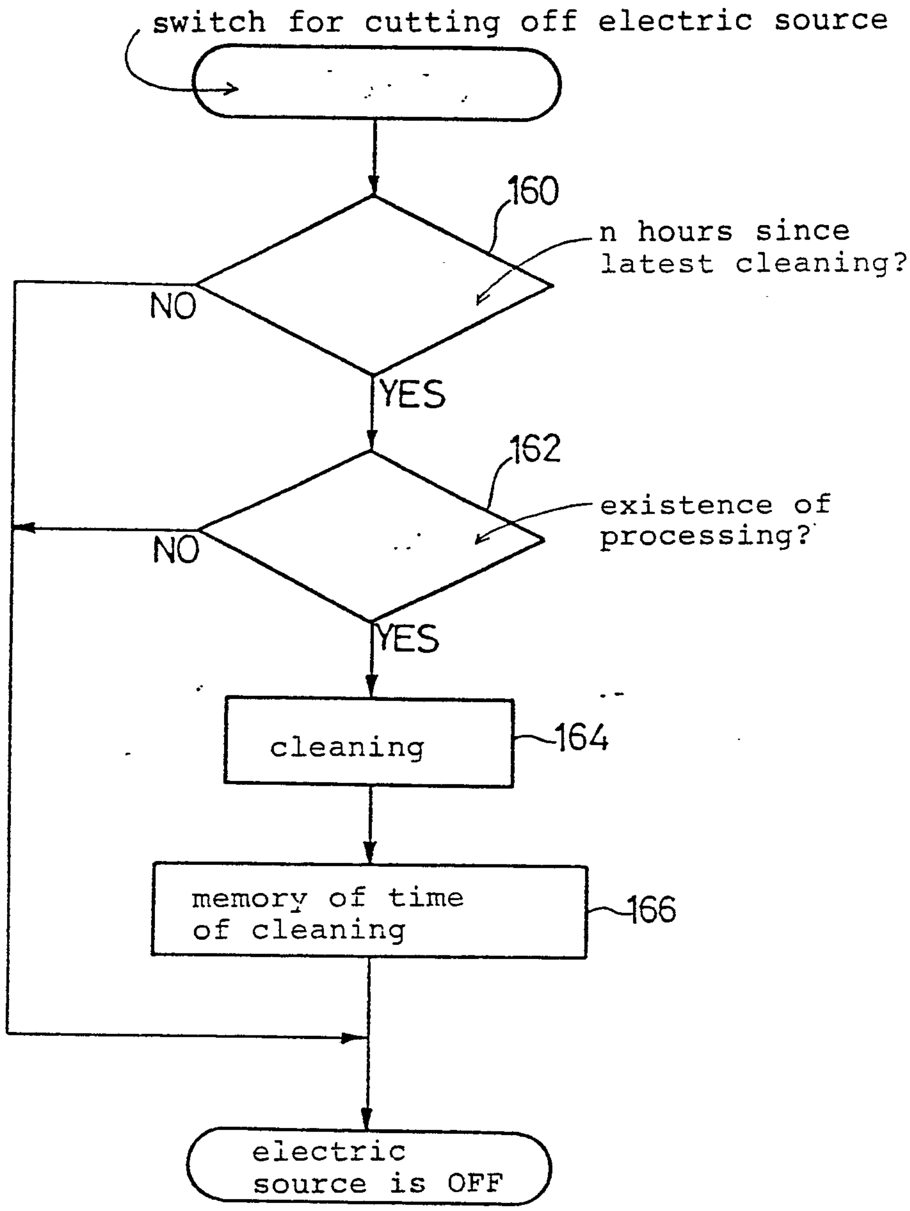
switch for cutting off electric source
160
n hours since latest cleaning?
NO
YES
162
existence of processing?
NO
YES
cleaning
164
memory of time of cleaning
166
electric source is OFF

0 348 512

Figure 13

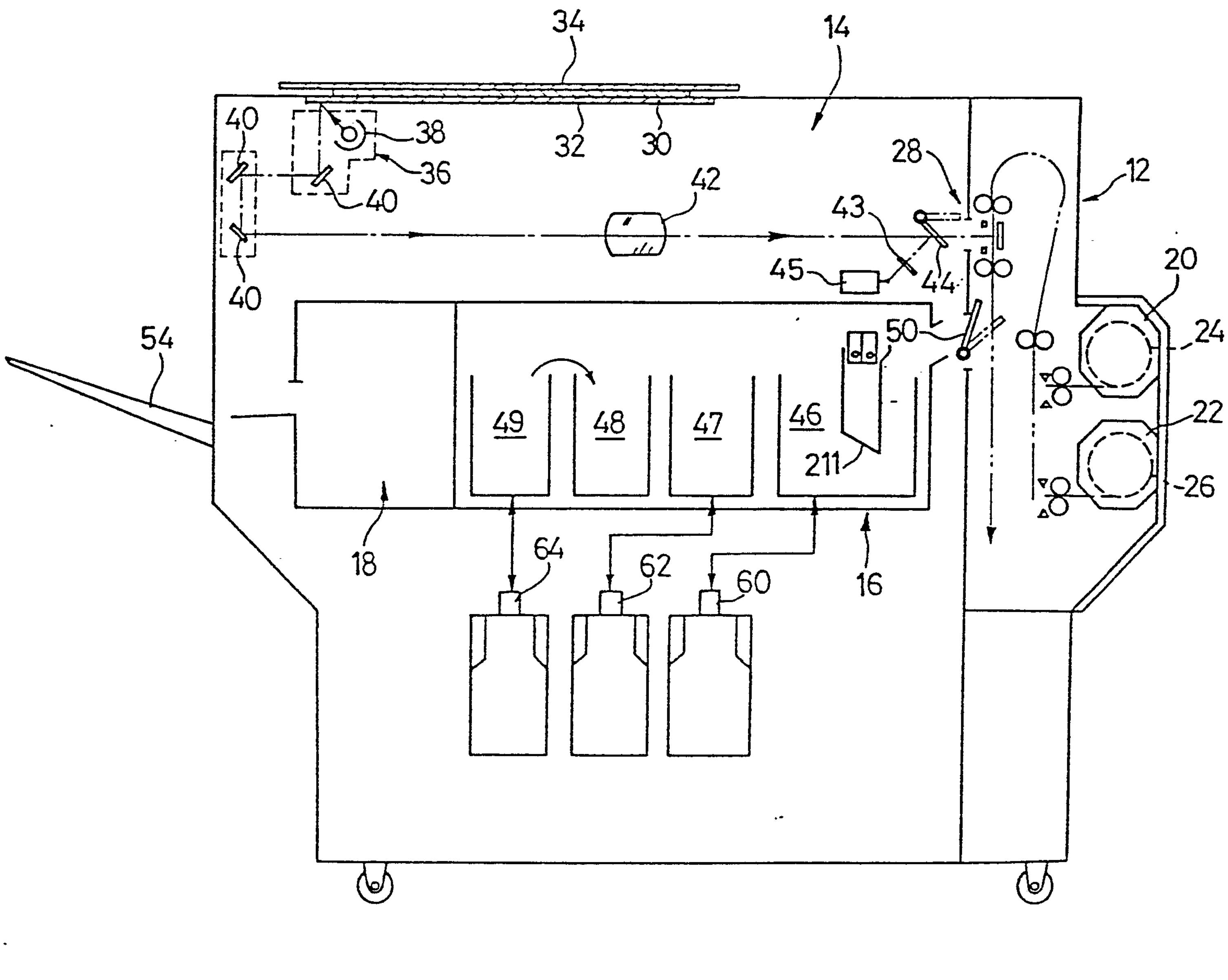

0 348 512

# INTERNATIONAL SEARCH REPORT

International Application No PCT/JP88/01118

**I. CLASSIFICATION OF SUBJECT MATTER** (if several classification symbols apply, indicate all) [6]

According to International Patent Classification (IPC) or to both National Classification and IPC

Int.Cl$^4$ G03D3/06, G03C5/26

**II. FIELDS SEARCHED**

Minimum Documentation Searched [7]

| Classification System | Classification Symbols |
|---|---|
| IPC | G03D3/06, G03C5/26 |

Documentation Searched other than Minimum Documentation to the Extent that such Documents are Included in the Fields Searched [8]

Jitsuyo Shinan Koho 1960 - 1988
Kokai Jitsuyo Shinan Koho 1971 - 1988

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 55-156944 (Toppan Printing Co., Ltd.) 6 Decmeber 1980 (06. 12. 80) (Family: none) | 1, 6 |
| Y | JP, A, 55-46757 (Yamatoya Shokai Kabushiki Kaisha) 2 April 1980 (02. 04. 80) (Family: none) | 1, 6 |
| Y | JP, A, 55-126243 (Konishiroku Photo Ind. Co., Ltd.) 29 September 1980 (29. 09. 80) (Family: none) | 2, 3 |
| Y | JP, A, 56-1054 (Konishiroku Photo Ind. Co., Ltd.) 8 January 1981 (08. 01. 81) (Family: none) | 4 |
| Y | JP, A, 58-44438 (Konishiroku Photo Ind. Co., Ltd.) 15 March 1983 (15. 03. 83) (Family: none) | 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 24, 1989 (24. 01. 89) | February 6, 1989 (06. 02. 89) |
| **International Searching Authority** | **Signature of Authorized Officer** |
| Japanese Patent Office | |